# FASCICULE DE BREVET EUROPEEN

(11) **EP 3 701 462 B1**
(45) Date de publication et mention de la délivrance du brevet: **22.12.2021**
(21) Numéro de dépôt: 18789431.6
(22) Date de dépôt: 25.10.2018
(51) Int. Cl.: G06Q 20/06, G06Q 20/34, G06Q 20/36, G06Q 20/38, H04L 9/08, H04L 9/32, H04L 9/14

(54) **MÉTHODE ET SYSTÈME D'INSCRIPTION SÉCURISÉ DE CLÉS CRYPTOGRAPHIQUES SUR UN SUPPORT PHYSIQUE POUR CLÉS CRYPTOGRAPHIQUES, ET SUPPORT PHYSIQUE PRODUIT**
VERFAHREN UND SYSTEM ZUR SICHEREN REGISTRIERUNG VON KRYPTOGRAPHISCHEN SCHLÜSSELN AUF EINEM PHYSIKALISCHEN MEDIUM FÜR KRYPTOGRAPHISCHE SCHLÜSSEL UND PHYSIKALISCHES MEDIUM
METHOD AND SYSTEM FOR SECURELY REGISTERING CRYPTOGRAPHIC KEYS ON A PHYSICAL MEDIUM FOR CRYPTOGRAPHIC KEYS, AND PHYSICAL MEDIUM PRODUCED

(30) Priorité: 27.10.2017 LU 100497
(43) Date de publication de la demande: 02.09.2020
(73) Titulaire: Coinplus SA, 4362 Esch-sur-Alzette (LU)
(72) Inventeur: KAYAN, Yves-Laurent, L-1126 Luxembourg (LU); BERTHOLON, Benoît, L-6111 Junglister (LU); BODT, Christian, L-4360 Esch-sur-Alzette (LU)
(74) Mandataire: Dennemeyer & Associates S.A.
(86) Numéro de dépôt international: PCT/EP2018/079334
(87) Numéro de publication internationale: WO 2019/081667

(56) Documents cités:
- WO-A1-2017/028828
- US-A1- 2003 161 475
- US-A1- 2013 166 455
- US-A1- 2015 127 946
- Pedro Franco: "Understanding Bitcoin: Cryptography, Engineering and Economics" In: "Understanding Bitcoin: Cryptography, Engineering and Economics", 24 novembre 2014 (2014-11-24), Wiley, XP055393688, ISBN: 978-1-119-01916-9 pages ToC,Ch01-Ch02,Ch05-Ch07,Ch12-, section 6.3 et 6.6

## Description

La présente invention concerne une méthode et un système d'inscription sécurisé et de stockage sécurisé de clés cryptographiques sur un support physique, et un support physique produit suivant ce procédé. Le produit de cette invention est un support physique que l'utilisateur peut conserver de manière sécurisée en utilisant les contrôles d'accès qu'il juge opportuns et nécessaires.

### Domaine technique

La présente invention concerne la sécurité des données, et plus particulièrement la manipulation sécurisée d'éléments de données hautement sensibles tels que les clés cryptographiques. L'invention fournit une méthode d'inscription et de stockage avec contrôle d'accès sécurisé. L'invention est particulièrement adaptée pour, mais sans s'y limiter, l'utilisation de portefeuilles numériques (logiciels). Cela peut inclure, par exemple, des portefeuilles utilisés en relation avec des crypto-monnaies telles que Bitcoin, Ethereum, Litecoin, etc. Selon un premier aspect, la présente invention concerne une méthode d'inscription et de stockage de clés cryptographiques sur un support physique incluant des clés cryptographiques utilisées par exemple pour permettre l'accès à des portefeuilles en relation avec des crypto-monnaies. Selon un deuxième aspect, l'invention propose un propose un système d'inscription et de stockage de telles clés cryptographiques sur un support physique. Selon un troisième aspect, l'invention propose un support physique produit suivant ce procédé et apte à stocker de telles clés cryptographiques et à permettre la reconstruction d'une clé asymétrique d'accès spécifique à un compte sécurisé en association avec un système de gestion de portefeuille numérique.

### Indication de l'état de la technique antérieure

Concernant l'état de la technique antérieure, il existe des procédés et systèmes de génération de clés cryptographiques pour permettre la reconstruction d'une clé d'accès spécifique à un compte sécurisé.

La publication WO-2017145018 révèle un exemple de procédé et de système sécurisé pour échanger des entités via une chaîne de blocs en intégrant des techniques de tokenisation, ainsi que des techniques pour intégrer des métadonnées dans un script d'échange d'une transaction blockchain, le script comprenant une première clé publique d'utilisateur (P1A) associée à une première clé privée utilisateur (V1A) formant une paire cryptographique asymétrique, et une première clé publique tierce (P1T) associée à une première clé privée tierce (V1T) formant une paire cryptographique asymétrique. Cette méthode consiste en un hachage du premier script pour générer un premier script hash et à publier le premier script et le premier script hash sur une table hash distribuée.

La publication US 2017237561 révèle un autre exemple de méthode et système pour prendre en charge des communications sécurisées à l'aide d'un module communiquant avec un serveur en accédant à Internet, et d'une application ,le module pouvant dériver des paires de clés privées / publiques à l'aide d'algorithmes cryptographiques et d' ensembles de paramètres pour envoyer les données du module à l'application et recevoir les instructions du module à partir de l'application.

La publication US2015164192 révèle un support ou objet collectable avec une cavité scellée qui contient une clé privée qui accorde à l'utilisateur l'accès à une crypto-monnaie enregistrée sur un compte lorsque la cavité de l'objet scellé est visiblement cassée afin d'accéder à la cavité, l'objet comportant un enregistrement de la date de dépôt, et du montant de la crypto-monnaie dans le compte, des instructions pour l'utilisation d'une clé privée et / ou publique, et une clé publique qui permet à l'utilisateur de voir le montant de crypto-monnaie déposé dans le compte.

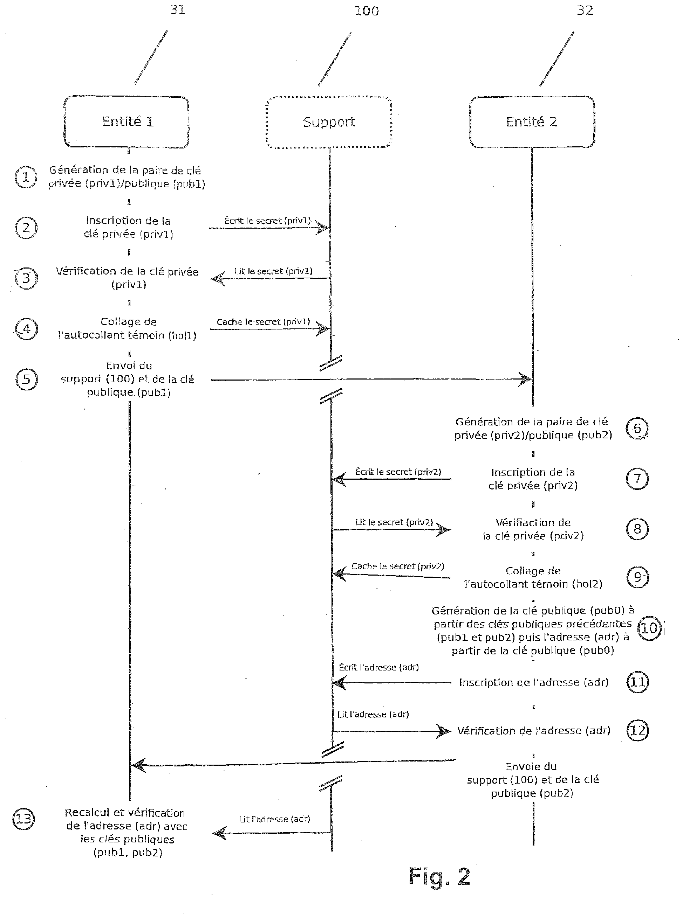

La publication US 2013/0166455A1 révèle un autre exemple de méthode et système d'inscription et de stockage sécurisé dans lequel diviser les clés privées sont divisées pour les stocker dans des lieux différents. Un problème majeur avec le système de cette publication est que le fabriquant 206 (fig.2) connait le secret qui permet d'utiliser la monnaie cryptographique.

La publication WO 2017/028828 A1 révèle un procédé d'inscription et de stockage sécurisé de clés cryptographiques sur un support physique dispositif suivant le préambule de la revendication 1, et un système d'inscription et de stockage sécurisé de clés cryptographiques sur support physique suivant le préambule de la revendication 14 .

### Définitions

**Cryptographie asymétrique** : La cryptographie asymétrique se base sur l'existence de fonctions mathématiques à sens unique. Ces fonctions mathématiques utilisent 2 paramètres appelés clé privée et clé publique. La clé publique est utilisée pour chiffrer ou vérifier une signature, cette clé publique a pour but d'être diffusée et utilisée par tout le monde. La clé privée correspondante permet de déchiffrer ou de signer un message.

**Paire de clés asymétriques** : une paire de clés asymétriques est composée d'une clé publique et de la clé privée correspondante. Une paire de clé est soit utilisé pour le chiffrement/déchiffrement soit pour la signature/vérification. Connaissant la clé publique il est impossible, dans un temps raisonnable, de trouver la clé privée correspondante. La clé privée est confidentielle et doit être gardée secrète.

**Signature électronique** : une signature électronique utilise la cryptographie asymétrique. La clé privée est utilisée pour signer et la clé publique pour vérifier la signature.

**Autocollant holographique témoin** : L'autocollant holographique témoin est un autocollant contenant un hologramme 3d qui, lorsqu'il est décollé, se détruit. Après avoir retiré un autocollant holographique témoin, il est impossible de le repositionner sans que son retrait ne puisse être détecté visuellement. Dès lors il peut être utilisé pour voir si un secret caché sous cet autocollant a été révélé.

**Monnaie cryptographique** : les monnaies cryptographiques sont des monnaies basées sur la technologie dite de « blockchain » ou chaine de blocks où toutes les transactions sont stockées dans une base de données distribuée entre tous les participants. Chaque transaction de monnaie cryptographique doit être signée électroniquement en utilisant une clé privée asymétrique.

**Jeton de monnaie cryptographique** : Unité de valeur utilisé dans les monnaies cryptographique. Ces jetons sont associés à une clé publique et sont transférables d'une clé publique à une autre en signant (à l'aide de la clé privé) une transaction électronique.

**Adresse de Monnaie cryptographique** : Dans le cadre des monnaies cryptographiques, les jetons peuvent être associés non pas à une clé publique mais à une adresse. Cette adresse est le plus souvent calculée en fonction de la clé publique.

**Adresse Multi-signature s sur *n:*** les jetons utilisés comme crypto-monnaie peuvent être envoyé à une adresse multi-signature, ce qui signifie que pour être utilisés les jetons doivent être dépensés dans une transaction qui doit être signée par plusieurs clés privées asymétrique. De plus, il est possible d'indiquer le nombre de signatures s nécessaires parmi les *n* clés paires de clés sélectionnées. Par exemple, pour dépenser un jeton envoyé à une adresse multi-signature 3 sur 4, la signature de 3 clés privées parmi un set de 4 paires de clés asymétriques peut être nécessaire. Toutes les informations (set de clés asymétrique, nombre de signature nécessaires, etc...) concernant les exigences pour utiliser les jetons envoyés à une adresse multi-signature de monnaie cryptographique sont « résumées » dans l'adresse (https://github.com/bitcoin/bips/blob/master/bip-0016.mediawiki).

**Certificat Racine** : les certificats racine sont des certificats électroniques générés par une autorité de certification. Ces certificats racine se trouve par exemple dans les navigateurs web et permette de vérifier la validité du certificat d'un site web et dès lors de commencer une communication chiffrer.

**Portefeuille numérique** : Un portefeuille numérique est un logiciel ou un service qui permet à son utilisateur d'effectuer des opérations de paiement en utilisant des monnaies cryptographiques. Le rôle du portefeuille numérique est à la fois de créer, de signer et de publier une transaction de monnaies cryptographiques.

### Problème : Stockage sécurisé long terme des clés privées cryptographiques

La cryptographie à clé publique est souvent utilisée pour protéger des informations nécessaires à des transactions . L'utilisation de clés asymétriques, comportant une cryptographie à clé publique, déplace la question de la sécurité dans une certaine mesure. Bien que la clé privée soit gardée secrète, sa clé publique correspondante peut être rendue publique. Son interception par un tiers n'est pas problématique.

Comme toutes autres données informatiques, les clés privées cryptographiques sont soumises au problème du stockage qui requiert un haut niveau de sécurité. Il doit être résistant aux attaques de personnes malveillantes, à l'épreuve du temps et des désastres naturels.

Résister aux attaques de personnes malveillantes signifie que le support ne doit pas être accessible facilement. Cela peut être fait en stockant la clé sur un support non connecté dans un endroit où les contrôles d'accès sont importants, par exemple dans un coffre de banque. Cela veut dire que la clé cryptographique n'est pas utilisée régulièrement, ce qui est le cas pour les clés privées des certificats racine ou les clés utilisées pour les investissements longs termes de monnaies cryptographiques.

Suivant l'art antérieur, on peut reprocher à ces méthodes et systèmes de génération de clés cryptographiques connus sur un support qu'ils ne sont pas prévus pour résoudre le problème de l'inscription et du stockage à long terme des clés privées avec un haut niveau de sécurité et que ces clés cryptographiques sont vulnérables à l'interception par des tiers non autorisés. Avec ces méthodes et systèmes de génération de clés cryptographiques connus, rien n'est prévu pour résister aux attaques de personnes malveillantes lors de la création du support, ou pour éviter que le support soit détruit par l'épreuve du temps et des désastres naturels.

En outre, les problèmes résultent également dans leur mise en oeuvre car ces supports de stockage de clés cryptographiques sont peu fiables et ne résistent pas aux intempéries, et autres désastres naturels.

Le stockage de la clé privée soulève des problèmes de sécurité importants. Les supports digitaux sont fragiles et peuvent se dégrader au fur et à mesure du temps. A titre d'exemple , dans le cas d'un portefeuille de crypto-monnaie numérique tel qu'un portefeuille Bitcoin, le portefeuille comprend un logiciel qui permet à un utilisateur de se connecter. La clé privée est stockée soit par le portefeuille installé sur le périphérique de l'utilisateur, soit par un fournisseur de services de portefeuille. Cependant, la clé privée stockée peut être volée ou perdue, la perte pouvant être due à des dommages causés au matériel de l'utilisateur, par exemple ordinateur. De même, si l'utilisateur meurt ou devient incapable, l'accès à la clé privée peut être perdu et donc les fonds associés au portefeuille deviennent inaccessibles. Bien que le stockage côté fournisseur de services de la clé privée puisse surmonter ces problèmes, l'utilisateur doit être prêt à faire confiance au fournisseur de services pour garder sa clé privée en toute sécurité.

Les violations de sécurité du côté du fournisseur de services sont alors un risque réel et important.

### Résumé de l'invention

Il est donc clair qu'un besoin existe pour une méthode et un système qui, dans une large mesure, permet de remédier aux insuffisances que l'on a rencontrées dans la technique antérieure.

Un des objets de l'invention est de fournir une méthode et un système d'inscription sécurisé de clés cryptographiques sur un support physique avec lesquels les clés privées cryptographiques ne sont plus soumises au problème du stockage à long terme.

Un autre but de la présente invention est de proposer une méthode et un système qui dans le cas des clés cryptographiques, assure un stockage avec un haut niveau de sécurité, et qui est résistant aux attaques de personnes malveillantes, ainsi qu'à l'épreuve du temps et des désastres naturels.

Résister aux attaques de personnes malveillantes signifie que le support ne doit pas être accessible facilement.

Par conséquent, un but de la présente invention est de fournir une méthode et un système d'inscription et de stockage discret de clés cryptographiques sur un support physique fiable.

La présente invention doit permettre d'améliorer la confiance dans la création de clés cryptographiques sur un support physique afin de faciliter l'accès par l'utilisateur aux clés cryptographiques stockées sur le support et à permettre la reconstruction d'une clé d'accès spécifique par exemple à un compte sécurisé en association avec un système de gestion de portefeuille. Ainsi, il est souhaitable de fournir une solution qui permet une manipulation sûre d'un secret. Ce secret peut être une clé cryptographique et/ou une adresse calculée à partir d'une clé cryptographique pour donner accès à la clé.

Une telle solution améliorée a été conçue.

Le problème à résoudre est de pallier aux inconvénients mentionnés ci-dessus de l'art antérieur, c'est-à-dire de fournir un support de stockage de clés cryptographiques entièrement fiables et résistant aux désastres naturels, ainsi qu'un procédé d'inscription du dit support réduisant la confiance nécessaire aux entités impliquées dans sa création.

Une telle solution améliorée a été conçue. Conformément à la présente invention, cet objectif est atteint en ce que le procédé d'inscription et de stockage sécurisé de clés cryptographiques sur un support physique comprend les caractéristiques de la revendication 1.

A cet effet, selon un autre aspect, l'invention propose un système d'inscription et de stockage sécurisé de clés cryptographiques sur un support physique qui comprend les caractéristiques de la revendication 13.

Selon un autre aspect, l'invention propose aussi un support physique d'inscription et de stockage sécurisé de clés cryptographiques qui comprend les caractéristiques de la revendication 15.

Plus particulièrement, à cet effet, conformément à l'invention, ce but est atteint par le fait que le procédé d'inscription et de stockage du type précité comprend les étapes suivantes :
a) à partir d'une première entité de gestion , la génération d'une première paire de clés cryptographiques asymétriques comprenant une première clé publique utilisateur (pub1) et une première clé privée utilisateur (priv1), comprenant de :
   - mémoriser la première clé publique utilisateur (pub1) dans une première mémoire d'enregistrement ;
   - inscrire la première clé privée utilisateur (priv1) sur un support physique, et
   - vérifier la première clé privée utilisateur (priv1) inscrite et apposer un premier élément occultant témoin (hol1) sur le support physique pour occulter la première clé privée utilisateur (priv1) et la sceller, ladite première clé privée utilisateur (priv1) n'étant accessible que par rupture visible dudit premier élément occultant témoin (hol1) ;
b) l'envoi du support physique à une deuxième entité de gestion,
c) à partir de la deuxième entité de gestion, la génération d'une deuxième paire de clés cryptographiques asymétriques comprenant une deuxième clé publique utilisateur (pub2) et une deuxième clé privée utilisateur (priv2), comprenant de :
   - mémoriser la deuxième clé publique utilisateur (pub2) dans une deuxième mémoire d'enregistrement ;
   - inscrire la deuxième clé privée utilisateur (priv2) sur le support physique, et
   - vérifier la deuxième clé privée utilisateur (priv2) inscrite et apposer un deuxième élément occultant témoin (hol2) sur le support physique pour occulter la deuxième clé privée utilisateur (priv2) et la sceller, ladite deuxième clé privée utilisateur (priv2) n'étant accessible que par rupture visible dudit deuxième élément occultant témoin (hol2) ;
d) la génération d'au moins une dernière clé publique utilisateur (pub0) et/ou d'au moins une adresse cryptographique (adr, adr-mult) à partir de la première clé publique utilisateur (pub1) et de la deuxième clé publique utilisateur (pub2),
e) l'inscription de ladite au moins une dernière clé publique utilisateur (pub0) et/ou de ladite au moins une adresse cryptographique (adr, adr-mult) sur le support physique, et la vérification de celle-ci, et
f) la récupération finale des clés privées (priv1,priv2) comportant la génération d'une dernière clé privée utilisateur (priv0) correspondant à la dernière clé publique utilisateur (pub0) et/ou à ladite au moins une adresse cryptographique (adr, adr-mult).

Selon l'invention, la méthode et le système ne permettent l'exécution de la transaction **uniquement** avec le seul support physique. La solution de l'invention est donc de supprimer complètement les secrets possédés par les entités distinctes qui sont impliquées et de ne les conserver que sur le seul support.

Ainsi, grâce à la méthode et le système de l'invention permettant la création d'un support physique avec une plus grande confiance que la clef privée, il ne sera utilisable que par le détenteur du support physique, l'idée étant que séparément, les entités impliquées dans sa création n'ont jamais accès à la clef privée complète. Aucune des entités ne peut utiliser la clé cryptographique complète. Seul le possesseur du support physique peut utiliser la clé cryptographique complète.

Selon l'invention, la première clé privée utilisateur (priv1) est gravée sur le support physique par un premier appareil de gravure et la deuxième clé privée utilisateur (priv2) est gravée sur le support physique par un deuxième dispositif de gravure distinct du premier appareil de gravure.

Préférentiellement, ladite au moins une dernière clé publique utilisateur (pub0) est gravée sur le support physique et/ou ladite au moins une adresse cryptographique (adr, adr-mult) est gravée sur le support physique.

Préférentiellement, la dernière clé publique utilisateur (pub0) fait partie d'une troisième paire cryptographique asymétrique comprenant la dernière clé publique utilisateur (pub0) et la dernière clé privée utilisateur (priv0).

Préférentiellement, dans une réalisation de l'invention, l' étape de récupération des clés privées comprend de :
- vérifier l'intégrité des premiers et deuxièmes éléments occultant témoins (hol1, hol2),
- lire les première et deuxième clés privées utilisateur (priv1, priv2) en retirant les premier et deuxième éléments occultant témoins (hol1, hol2), et
- à partir des première et deuxième clés privées utilisateur (priv1, priv2) inscrites sur le support, générer ensuite la dernière clé privée utilisateur (priv0) correspondant à la dernière clé publique utilisateur (pub0).

Préférentiellement, dans une réalisation de l'invention, la dernière clé publique utilisateur (pub0) permet de générer ladite au moins une adresse cryptographique (adr), cette adresse (adr) étant calculée à partir de la dernière clé publique utilisateur (pub0) et étant inscrite sur le support physique.

Dans une autre réalisation de l'invention,ladite au moins une adresse cryptographique (adr-mult) est une adresse multi-signature (adr-mult) générée à partir de la première clé publique utilisateur (pub1) et de la deuxième clé publique utilisateur (pub2), cette adresse multi-signature (adr-mult) étant gravée sur le support physique.

Préférentiellement, ledit procédé comporte une étape de récupération des clés privées qui comprend de :
- vérifier l'intégrité des premiers et deuxièmes éléments occultants témoins (hol1, hol2),
- lire les première et deuxième clés privées utilisateur (priv1, priv2) en retirant les premier et deuxième éléments occultants témoins (hol1, hol2), et
- à partir les première et deuxième clés privées utilisateur (priv1, priv2) inscrites sur le support, recalculer ladite au moins une adresse cryptographique (adr) et vérifier ensuite sa correspondance avec l'adresse cryptographique (adr) inscrite sur le support physique pour permettre d'accéder à et/ou de retirer une crypto-monnaie d'un compte.

Dans une autre réalisation de l'invention, le procédé comprend :
f) l'envoi du support physique à une troisième entité de gestion ,
g) à partir de la troisième entité de gestion, la génération d'une troisième paire de clés cryptographiques asymétriques comprenant une troisième clé publique utilisateur (pub3) et une troisième clé privée utilisateur (priv3), comprenant de :
   - mémoriser la troisième clé publique utilisateur (pub3) dans une troisième mémoire d'enregistrement;
   - inscrire la troisième clé privée utilisateur (priv3) sur le support physique, et
   - vérifier la troisième clé privée utilisateur (priv3) inscrite et apposer un troisième élément occultant témoin (hol3) sur le support physique pour occulter la troisième clé privée utilisateur (priv3) et la sceller, ladite troisième clé privée utilisateur (priv3) n'étant accessible que par rupture visible dudit troisième élément occultant témoin (hol3);
h) la génération de la dernière clé publique utilisateur (pub0) et/ou d'au moins une adresse cryptographique (adr, adr-mult) à partir de la première clé publique utilisateur (pub1), de la deuxième clé publique utilisateur (pub2) et de la troisième clé publique utilisateur (pub3), et
i) l'inscription de ladite dernière clé publique utilisateur (pub0) et/ou de ladite au moins une adresse cryptographique (adr, adr-mult) sur le support physique, et la vérification de celle-ci.

Préférentiellement, l' étape de récupération des clés privées comprend de :
- vérifier l'intégrité des premier, deuxième et troisième éléments occultants témoins (hol1,hol2, hol3),
- lire les première, deuxième et troisième clés privées utilisateur (priv1, priv2, priv3) en retirant premier, deuxième et troisième éléments occultants témoins, et
- à partir les première, deuxième et troisième clés privées utilisateur (priv1, priv2, priv3) inscrites sur le support, générer ensuite la dernière clé privée utilisateur (priv0) correspondant à la dernière clé publique utilisateur (pub0) et/ou à ladite au moins une adresse cryptographique (adr, adr-mult).

Préférentiellement, la dernière clé publique utilisateur (pub0) permet de générer ladite au moins une adresse cryptographique (adr), cette adresse (adr) étant calculée à partir de la dernière clé publique utilisateur (pub0) et étant gravée sur le support physique.

Préférentiellement, chacun des éléments occultant est un autocollant holographique témoin (hol1, hol2, hol3).

Dans une autre réalisation de l'invention, le procédé comprend la génération d'une pluralité de *n* clés cryptographiques asymétriques, à partir de *n* entités de gestion distinctes ,avec *n*>2, lesdites clés comprenant chacune une combinaison de clé publique utilisateur avec une clé privée utilisateur, et/ou une adresse de clé publique , et/ou une adresse multi-signature de plusieurs clés publiques, les *n-1* premières entités de gestion effectuant les étapes (1) à (5) les unes à la suite des autres et la *n*^{ème} entité de gestion complétant la réalisation des étapes (6) à (13).

Selon un autre aspect, le système d'inscription et de stockage sécurisé de clés cryptographiques sur un support physique de l'invention comprend :
une première entité de gestion configurée pour générer une première paire de clés cryptographiques asymétriques comprenant une première clé publique utilisateur (pub1) et une première clé privée utilisateur (priv1),
la première entité de gestion comportant :
   - un premier ordinateur dans lequel des instructions de programme sont mémorisées, lesquelles instructions, lorsqu'elles sont lues par un premier processeur de données, font que le premier ordinateur génère la première clé privée utilisateur (priv1) et mémorise la première clé publique utilisateur (pub1) dans une première mémoire d'enregistrement,
   - un premier dispositif associé au premier ordinateur configuré pour inscrire la première clé privée utilisateur (priv1) sur un support physique, et
   - un premier moyen pour vérifier la première clé privée utilisateur (priv1) inscrite et apposer un premier élément occultant témoin (hol1) sur le support physique pour occulter la première clé privée utilisateur (priv1) et la rendre non-visible,
une deuxième entité de gestion configurée pour générer une deuxième paire de clés cryptographiques asymétriques comprenant une deuxième clé publique utilisateur (pub2) et une deuxième clé privée utilisateur (priv2), la deuxième entité de gestion (32) comportant :
   - un deuxième ordinateur dans lequel des instructions de programme sont mémorisées, lesquelles instructions, lorsqu'elles sont lues par un deuxième processeur de données, font que le deuxième ordinateur est configuré pour mémoriser la deuxième clé publique utilisateur (pub2) dans une deuxième mémoire d'enregistrement ;
   - un deuxième dispositif associé au deuxième ordinateur pour inscrire la deuxième clé privée utilisateur (priv2) sur le support physique, et
   - un deuxième moyen pour vérifier la deuxième clé privée utilisateur (priv2) inscrite et apposer un deuxième élément occultant témoin (hol2) sur le support physique pour occulter la deuxième clé privée utilisateur (priv2) et la rendre non-visible,
   - le deuxième ordinateur étant en outre configuré pour la générer une dernière clé publique utilisateur (pub0) à partir de la première clé publique utilisateur (pub1) et de la deuxième clé publique utilisateur (pub2), et permettre l'inscription de la dernière clé publique utilisateur (pub0) sur le support physique par le deuxième dispositif, le premier dispositif comprenant un premier appareil de gravure configuré pour graver la première clé privée utilisateur (priv1) sur le support physique, et ledit deuxième dispositif comprenant un deuxième appareil de gravure distinct du premier appareil de gravure configuré pour graver la deuxième clé privée utilisateur (priv2) sur le support physique.

Dans une autre réalisation de l'invention, le système comprenant en outre:
une troisième entité de gestion configurée pour générer une troisième paire de clés cryptographiques asymétriques comprenant une troisième clé publique utilisateur (pub3) et une troisième clé privée utilisateur (priv3),
la troisième entité de gestion comportant :
   - un troisième ordinateur dans lequel des instructions de programme sont mémorisées, lesquelles instructions, lorsqu'elles sont lues par un troisième processeur de données, font que le troisième ordinateur mémorise la troisième clé publique utilisateur (pub3) dans une troisième mémoire d'enregistrement et génère la troisième première clé privée utilisateur (priv3),
   - un troisième dispositif associé au troisième ordinateur configuré pour inscrire la troisième clé privée utilisateur(priv3) sur le support physique, et
   - un troisième moyen pour vérifier la troisième clé privée utilisateur (priv3) inscrite et apposer un troisième élément occultant témoin (hol3) sur le support physique pour occulter la troisième clé privée utilisateur (priv3) et la rendre non-visible,
   - le troisième ordinateur étant en outre configuré pour la générer la dernière clé publique utilisateur (pub0) à partir de la première clé publique utilisateur (pub1), de la deuxième clé publique utilisateur (pub2) et de la troisième clé publique utilisateur (pub3), et permettre l'inscription de la dernière clé publique utilisateur (pub0) sur le support physique par le troisième dispositif.

Selon un autre aspect, le support physique d'inscription et de stockage sécurisé de clés cryptographiques de l'invention comprend
- une première clé privée utilisateur (priv1) inscrite sur le support, la première clé privée utilisateur (priv1) étant associée à une première clé publique utilisateur (pub1) pour former une première paire de clés cryptographiques asymétriques,
- un premier élément occultant témoin (hol1) pour occulter la première clé privée utilisateur (priv1) et la sceller, ladite première clé privée utilisateur (priv1) n'étant accessible que par rupture visible dudit premier élément occultant témoin (hol1) ;
- une deuxième clé privée utilisateur (priv2) inscrite sur le support, la deuxième clé privée utilisateur (priv2) étant associée à une deuxième clé publique utilisateur (pub2) pour former une deuxième paire de clés cryptographiques asymétriques,
- un deuxième élément occultant témoin (hol2) pour occulter la deuxième clé privée utilisateur (priv2) et la sceller, ladite deuxième clé privée utilisateur (priv2) n'étant accessible que par rupture visible dudit deuxième élément occultant témoin (hol2); et
- au moins une dernière clé publique utilisateur (pub0) et/ou au moins une adresse cryptographique (adr, adr-mult) inscrite sur le support, celle-ci étant générée à partir de la première clé publique utilisateur (pub1) et de la deuxième clé publique utilisateur (pub2).

Préférentiellement, le support comprend en outre
- une troisième clé privée utilisateur (priv3) inscrite sur le support, la troisième clé privée utilisateur (priv3) étant associée à une troisième clé publique utilisateur (pub3) pour former une troisième paire de clés cryptographiques asymétriques ,
- un troisième élément occultant témoin (hol3) pour occulter la troisième clé privée utilisateur (priv3) et la sceller, ladite troisième clé privée utilisateur (priv3) n'étant accessible que par rupture visible dudit troisième élément occultant témoin (hol3); et
- la dernière clé publique utilisateur (pub0) et/ou l' adresse cryptographique (adr, adr-mult) inscrite sur le support étant générée à partir de la première clé publique utilisateur (pub1), de la deuxième clé publique utilisateur (pub2) et de la troisième clé publique utilisateur (pub3).

Préférentiellement, le support physique est en métal, en bois, en verre, en pierre, en plastique, en céramique, en cuir, en tissu, ou en papier.

Préférentiellement, le support physique peut être formé d'une barre en métal ou en alliage de métaux, telle qu'une barre en or, platine, argent ou acier.

Dans une réalisation de l'invention, le support physique est formé en outre d'une ou plusieurs parties mobiles en métal, les différentes clés publiques, clés privées ou adresses étant inscrites sur lesdites parties mobiles en métal.

Dans une autre réalisation de l'invention, le support est formé de plusieurs éléments séparés et d'une base, chaque élément séparé possédant ses propres clés privées (priv1, priv2) et sa propre clé publique (pub1), une adresse multi-signature de monnaie cryptographique commune aux éléments séparés étant générée et inscrite sur la base.

Dans une autre réalisation de l'invention, le support physique comprend une pluralité de *n* clés cryptographiques asymétriques, avec *n*>2, lesdites clés cryptographiques comprenant chacune une combinaison de clé publique utilisateur avec une clé privée utilisateur et/ou avec une adresse de clé publique et/ou avec une adresse multi-signature de plusieurs clés publiques,
- les *n* clés privées utilisateur étant inscrites sur le support,
- une pluralité de n éléments occultants témoin pour occulter chacune des clés privées utilisateur respectives inscrites sur le support et les sceller, lesdites *n* clés privées utilisateur n'étant accessibles que par rupture visible desdits *n* éléments occultants témoin respectifs, et
- une *n*+*1* ème clé publique utilisateur et/ou une *n+1* ème adresse cryptographique (adr, adr-mult) inscrite sur le support, celle-ci étant générée à partir des *n* clés publiques utilisateur.

Préférentiellement, le support physique comporte en outre une ou plusieurs des informations suivantes:
- le nom d'une entité de gestion,
- un numéro de série,
- une année de production,
- un nom et une quantité de monnaie cryptographique.

Dans le cadre de la présente invention, les objectifs sont atteints, en ce que clés cryptographiques peuvent être stockées sur un support physique non connecté dans un endroit où les contrôles d'accès sont importants, par exemple dans un coffre de banque. Cela veut dire que la clé cryptographique n'est pas utilisée régulièrement, ce qui est le cas pour les clés privées des certificats racine ou les clés utilisées pour les investissements longs termes de monnaies cryptographiques.

Les supports digitaux sont fragiles et peuvent se dégrader au fur et à mesure du temps. Cependant, les clés cryptographiques sont de petites tailles comparées aux autres fichiers informatiques, ce qui rend possible leurs stockages sur des supports physiques , donc non-digitaux.

Certain métaux ou alliages sont des supports très résistant qui peuvent subir des contraintes physiques importantes. Ces supports sont donc de très bons candidats pour un stockage long terme des clés cryptographiques.

Selon l'invention, les clés cryptographiques peuvent être gravées sur une barre en métal ou en alliage de métaux, telle qu'une barre en or, platine, argent ou acier.

Le stockage d'information sur des métaux nécessite une expertise et des machines spécialisées. Des individus privés doivent donc déléguer ce processus à une partie de confiance. La confiance est donc le point critique de cette méthode car l'entité qui inscrit l'information confidentielle sur le métal aura temporairement accès à l'information. Le processus de l'invention développé permet de diminuer le risque lié à la confiance en une seule entité en divisant cette confiance entre plusieurs entités distinctes séparées.

La Cryptographie implique des techniques de stockage sécurisé de données sensibles ainsi que sa communication entre deux ou plusieurs entités de gestion distinctes et séparées. Une entité de gestion peut inclure un dispositif de communication mobile, une tablette, un ordinateur portable, un ordinateur de bureau, d'autres formes de dispositifs informatiques et des dispositifs de communication, un dispositif serveur dans un réseau, un périphérique client, etc. Les entités de gestion peuvent être associées, par exemple, à une personne physique, à un groupe de personnes, comme les employés d'une entreprise, ou à un système tel qu'un système bancaire. Pour des raisons de sécurité, deux ou plusieurs entités de gestion ne peuvent être liées par un réseau de communication car il ne serait pas sûr et vulnérable à l'interception par des tiers non autorisés. Par conséquent, plusieurs informations secrètes différentes générées aléatoirement, avec suffisamment d'entropie, sont inscrites sur un seul support l'une après l'autres par deux personnes différentes à partir d'entités de gestion distinctes séparées. De préférence, chacune des deux personnes recouvre le secret au moyen d'un cache de sécurité immédiatement après l'inscription, par exemple avec un hologramme de sécurité.

Un ou plusieurs modes de réalisation de l'invention comprend l'étape consistant à dériver une clé cryptographique d'une paire de clés cryptographiques existantes.

Selon un mode de réalisation préféré, l'invention consiste à inscrire plusieurs privées sur un support formé par une barre en métal puis de cacher ces clés privées sous un autocollant holographique témoin. Chaque clé est gravée et cachée par un acteur différent. Dès lors, le propriétaire final de la barre n'a plus besoin de faire confiance à une seule et unique entité. Le propriétaire pourra de préférence conserver le support physique dans un endroit où les contrôles d'accès sont importants, par exemple dans un coffre de banque. Pour les monnaies cryptographiques, le résultat sera de préférence une barre en métal avec inscrit :
- Une clé privée gravée par l'Entité 1 et cachée par un Autocollant holographique témoin.
- Une clé privée gravée par l'Entité 2 et cachée par un Autocollant holographique témoin.
- Un numéro de série.
- Une année de production.
- Le nom et la quantité de monnaie cryptographique.
- L'adresse publique correspondant à la clé privée.

L'invention fournit un procédé mis en œuvre par ordinateur. Cela peut permettre le contrôle de l'accès sécurisé à une ressource avec une méthode de vérification ou d'authentification par gestion des clés cryptographiques. Le processus d'inscription des clés cryptographique nécessite au moins deux entités différentes. De préférence, les entités sont équipées du même type de matériel et du même logiciel. Elles ont une machine à graver reliée à un ordinateur pour réaliser l'inscription sur le support, par exemple une barre en métal. Cet ordinateur n'est connecté à aucun réseau pour éviter les cyberattaques. Il est également conseiller d'avoir un ordinateur avec une protection électromagnétique pour éviter les attaques utilisant les ondes électromagnétiques pour endommager ou espionner l'équipement. Sur cet ordinateur est installé le logiciel utilisé pour la génération des clés privées. Chaque entité de gestion possède de préférence des hologrammes différents qu'elle collera sur la barre en métal.

Le logiciel permet d'effectuer des calculs cryptographiques pour la génération, la vérification, et la signature des paires de clés asymétriques. Il permet aussi de générer une adresse de monnaies cryptographiques à partir d'une clé ou de plusieurs clés publiques.

L'invention propose une méthode et un système de contrôle d'accès avantageux.

Selon l'invention, c'est seulement à l'étape de la récupération ou rédemption que la dernière clé privée priv0 est générée ou calculée. Elle n'a, auparavant, jamais été présente sur aucun ordinateur ni nulle part ailleurs, ce qui veut dire que ni les employés des différentes entités de gestion, ni les employés de l'entité 2 n'ont pu voir cette dernière clé privée priv0, ni aucun ordinateur n'a généré cette dernière clé privée priv0 auparavant.

Préférentiellement , le propriétaire de la barre en métal pourra vérifier que les clés privées utilisateur ou secrets inscrits sur la barre n'ont pas été révélés en vérifiant l'intégrité des autocollants holographiques témoins. Dès lors, lorsque le propriétaire souhaite récupérer la dernière clé privée priv0 correspondante à la clé publique pub0 inscrite sur sa barre, il doit retirer les deux autocollants holographiques témoins. Les clés privées utilisateur ou secrets sont alors visibles. Le logiciel pour la récupération des clés privées demande au propriétaire de la barre de rentrer les secrets inscrits sur le métal. Le logiciel génère ensuite la dernière clé privée priv0 correspondante à la clé publique pub0 et c'est seulement à cette étape de récupération que la dernière clé privée priv0 est calculée.

### Brève description des figures

D'autres caractéristiques et avantages de l'invention apparaîtront à la lecture de la description détaillée qui suit. Aussi, afin de permettre une compréhension plus claire de l'invention on décrira ci-après, plusieurs formes de réalisation préférées, à titre d'exemple, en se référant en particulier aux figures en annexe, parmi lesquelles :
- la figure 1 illustre un schéma d'une réalisation représentative de l'invention ulilisant deux entités de gestion pour fournir une dernière clé publique utilisateur (pub0),
- la figure 2 illustre un schéma d'une autre réalisation représentative de l'invention ulilisant deux entités de gestion pour fournir une dernière clé publique utilisateur (pub0) et une adresse cryptographique,
- la figure 3 illustre un schéma d'une autre réalisation représentative de l'invention ulilisant deux entités de gestion pour fournir une adresse multi-signature,
- la figure 4 illustre un schéma d'une autre réalisation représentative de l'invention ulilisant trois entités de gestion pour fournir une dernière clé publique utilisateur (pub0),
- la figure 5 illustre un schéma d'une autre réalisation représentative de l'invention ulilisant trois entités de gestion pour fournir une dernière clé publique utilisateur (pub0) et une adresse cryptographique,
- la figure 6 illustre un schéma d'une autre réalisation représentative de l'invention ulilisant trois entités de gestion pour fournir une adresse multi-signature,
- la figure 7 représente une vue schématique d'une entité de gestion représentative du système de l'invention,
- la figure 8 représente une vue schématique d'un support physique dans une réalisation de l'invention, et
- la figure 9 représente une vue schématique d'un support physique dans une autre réalisation de l'invention,

La présente invention est décrite avec des réalisations particulières et des références à des figures mais l'invention n'est pas limitée par celles-ci. Les dessins ou figures décrits ne sont que schématiques et ne sont pas limitants.

### Premier Mode de réalisation de l'invention :

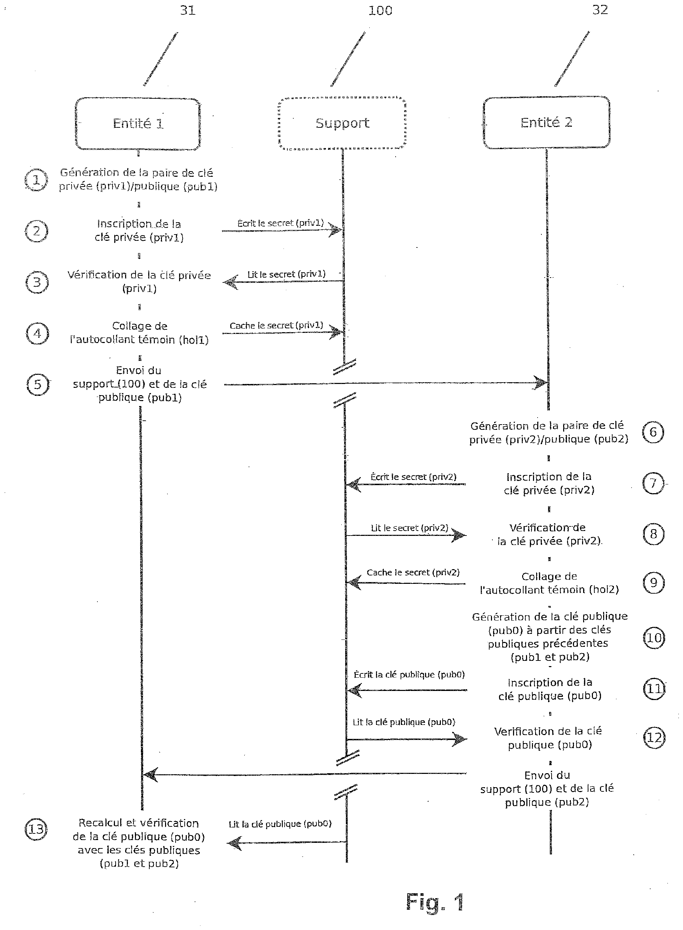

La figure 1 illustre une réalisation représentative utilisant deux entités de gestion 31 et 32 pour fournir une dernière clé publique utilisateur (pub0).

Le système d'inscription et de stockage sécurisé de clés cryptographiques sur un support physique comprend :
une première entité de gestion (31) configurée pour générer une première paire de clés cryptographiques asymétriques comprenant une première clé publique utilisateur (pub1) et une première clé privée utilisateur (priv1),
la première entité de gestion (31) comportant :
   - un premier ordinateur (41) dans lequel des instructions de programme sont mémorisées, lesquelles instructions, lorsqu'elles sont lues par un premier processeur de données, font que le premier ordinateur génère la première clé privée utilisateur (priv1) et mémorise la première clé publique utilisateur (pub1) dans une première mémoire d'enregistrement,
   - un premier dispositif (51) associé au premier ordinateur configuré pour inscrire la première clé privée utilisateur (priv1) sur un support physique, et
   - un premier moyen pour vérifier la première clé privée utilisateur (priv1) inscrite et apposer un premier élément occultant témoin (hol1) sur le support physique pour occulter la première clé privée utilisateur (priv1) et la rendre non-visible,
une deuxième entité de gestion (32) configurée pour générer une deuxième paire de clés cryptographiques asymétriques comprenant une deuxième clé publique utilisateur (pub2) et une deuxième clé privée utilisateur (priv2), la deuxième entité de gestion (32) comportant :
   - un deuxième ordinateur (42) dans lequel des instructions de programme sont mémorisées, lesquelles instructions, lorsqu'elles sont lues par un deuxième processeur de données, font que le deuxième ordinateur (42) est configuré pour mémoriser la deuxième clé publique utilisateur (pub2) dans une deuxième mémoire d'enregistrement ;
   - un deuxième dispositif (52) associé au deuxième ordinateur pour inscrire la deuxième clé privée utilisateur (priv2) sur le support physique, et
   - un deuxième moyen pour vérifier la deuxième clé privée utilisateur (priv2) inscrite et apposer un deuxième élément occultant témoin (hol2) sur le support physique pour occulter la deuxième clé privée utilisateur (priv2) et la rendre non-visible,
   - le deuxième ordinateur (42) étant en outre configuré pour la générer une dernière clé publique utilisateur (pub0) à partir de la première clé publique utilisateur (pub1) et de la deuxième clé publique utilisateur (pub2), et permettre l'inscription de la dernière clé publique utilisateur (pub0) sur le support physique par le deuxième dispositif (52).

### Matériel et logiciel

Le processus d'inscription des clés cryptographique nécessite au moins deux entités de gestion 31 et 32 différentes.

Les entités de gestion 31 et 32 peuvent être associées, par exemple, à une personne physique, à un groupe de personnes, comme les employés d'une entreprise, ou à un système tel qu'un fournisseur de services.

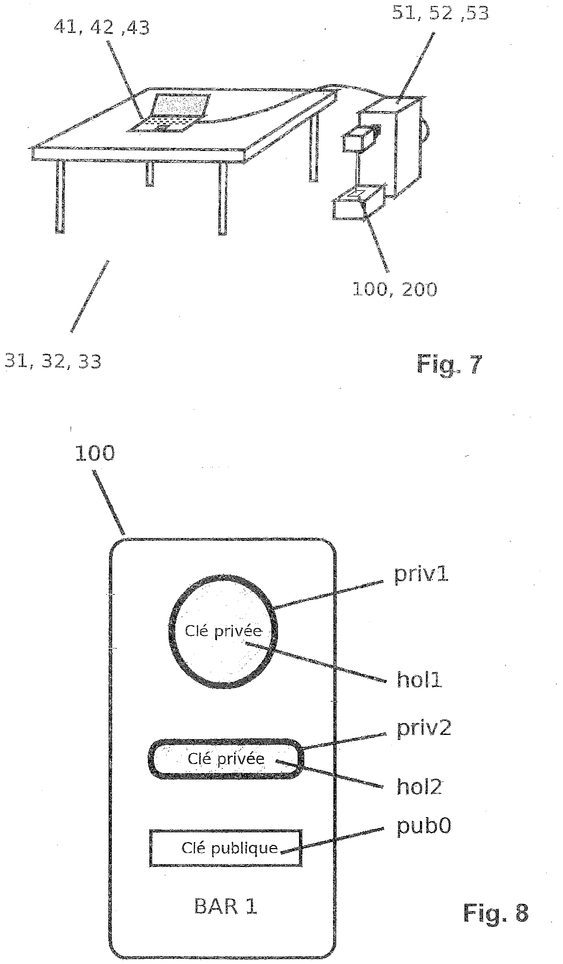

Comme le montre la Figure 7, les entités 31 et 32 comprennent une machine à graver 51,52 reliée à un ordinateur 41,42 pour réaliser l'inscription sur la barre en métal. Cet ordinateur 41,42 n'est connecté à aucun réseau pour éviter les cyberattaques. Il est également conseiller d'avoir un ordinateur 41,42 avec une protection électromagnétique pour éviter les attaques utilisant les ondes électromagnétiques pour endommager ou espionner l'équipement. Sur cet ordinateur est installé le logiciel utilisé pour la génération des clés privées. Les entités 31 et 32 peuvent utiliser le même type de matériel et de logiciel. Chaque entité possède des hologrammes différents qu'elle collera sur la barre en métal.

Le logiciel permet d'effectuer des calculs cryptographiques pour la génération, vérification, signature des paires de clés asymétriques. Il permet aussi de générer une adresse de monnaies cryptographiques à partir d'une clé ou de plusieurs clés publiques. Il est possible d'utiliser un ordinateur 41,42 avec une protection électromagnétique pour éviter les attaques utilisant les ondes électromagnétiques pour endommager ou espionner l'équipement. Sur cet ordinateur 41,42 est installé le logiciel utilisé pour la génération des clés privées. Chaque entité possède des hologrammes différents qu'elle collera sur la barre en métal.

Dans le cas de 2 entités, il peut y avoir 4 employés impliqués, soit à titre d'exemple,:
- Alice et Albert, employés de la première entité 31.
- Bob et Brian, employés de la seconde entité 32.

### Inscription des clés cryptographiques

Les étapes de la génération et de l'inscription des clés publiques et privées sont présentées dans de schéma de la Figure 1.
(1) Alice génère une paire de clés publique/privée sur l'ordinateur 41 à l'aide du logiciel.
(2) Alice prend une barre en métal 100 et inscrit la clé privée (priv1).
(3) Albert rentre cette clé privée dans le logiciel. Celui-ci va régénérer la clé publique (pub1). Albert vérifie que la clé publique générée à partir de la clé privée et la clé publique (pub1) générée par Alice sont les mêmes.
(4) Une fois cette vérification effectuée, Alice et Albert collent l'autocollant holographique témoin (hol1) de leur entité 31 sur la clé privée (priv1).
(5) Alice et Albert envoient la barre de métal et la clé publique (pub1) à la seconde entité.

La seconde entité 32 effectue ensuite un processus similaire.
(6) Brian génère une paire de clés publique/privée,
(7) Brian inscrit la clé privée (priv2), puis
(8) Bob vérifie à l'aide du logiciel que la clé gravée à bien la même clé publique (pub2) que celle de Brian.
(9) Bob et Brian collent l'autocollant holographique témoin (hol2) de leur entité 32 sur la clé privée (priv2).
(10) Puis utilisant les deux clés publiques pub1 et pub2, Brian dérive en utilisant le logiciel une troisième clé publique (pub0).
(11) Brian inscrit cette clé publique (pub0) sur la barre en métal 100 .
(12) Dans la dernière étape Bob vérifie, à partir des clés publiques pub1 et pub2, que la clé publique pub0 a été gravée correctement sur la barre en métal 100. Pour cela il rentre, à son tour, les clés publiques pub1 et pub2 dans le logiciel et il s'assure que la clé publique gravée sur la barre en métal 100 est la bonne. Bob et Brian envoient la barre de métal et la clé publique (pub2) à la première entité.
(13) Les employés Alice et Albert de l'entité 31 doivent également calculer la clé publique (pub0) en utilisant les clés publiques pub1 et pub2 et vérifier que la clé publique (pub0) inscrite sur la barre en métal 100 est bien la même que celle qu'ils ont calculée.

Dès lors, une fois que le processus de gravure s'est terminé correctement, les employés de l'entité 31 scellent la barre en métal 100 dans une protection en plastique.

Ce processus permet de créer une barre en métal 100 sur laquelle est inscrit par 2 entités différentes, 2 clés privées (priv1 et priv2) cachées par 2 autocollants holographiques témoins (hol1 et hol2) ainsi qu'une clé publique (pub0) correspondante à la combinaison des 2 clés privées (priv1 et priv2) cachées. A aucun moment les 2 clés privées (priv1 et priv2) n'ont été visible en même temps par une seule personne.

### Récupération de la clé privée

(14) Le propriétaire de la barre en métal 100 peut vérifier que les secrets (priv1 et priv2) de la barre 100 n'ont pas été révélés en vérifiant l'intégrité des autocollants holographiques témoins (hol1 et hol2).
(15) Lorsque le propriétaire souhaite récupérer la clé privée priv0 correspondante à la clé publique pub0 gravée sur sa barre 100, il doit retirer les deux autocollants holographiques témoins (hol1 et hol2). Les secrets (priv1 et priv2) sont alors visibles.
(16) Le logiciel pour la récupération des clés privées demande au propriétaire de la barre 100 de rentrer les secrets (priv1 et priv2) inscrit sur la barre en métal 100. Le logiciel génère ensuite la clé privée priv0 correspondante à la clé publique pub0. C'est seulement à l'étape de la récupération que la clé privée priv0 a été calculée. Elle n'a, auparavant, jamais été présente sur aucun ordinateur, ce qui veut dire que ni les employés de l'entité 31, ni les employés de l'entité 32 n'ont pu voir cette clé privée priv0.

### Deuxième mode de réalisation

La figure 2 illustre une réalisation représentative de l'invention utilisant deux entités de gestion 31 et 32 pour fournir une dernière clé publique utilisateur (pub0) et une adresse cryptographique (adr).

Dans cette variante, une dernière clé publique utilisateur (pub0) est générée et une adresse cryptographique (adr) est gravée (11) sur le support physique. La dernière clé publique utilisateur (pub0) permet de générer l'adresse cryptographique (adr), cette adresse (adr) étant calculée à partir de la dernière clé publique utilisateur (pub0) et étant gravée sur le support physique.

Dans cette variante du procédé, les étapes de la génération et de l'inscription des clés publiques et privées présentées dans de schéma de la Figure 2 sont similaires à celles présentées dans de schéma de la Figure 1.

Si les clés cryptographiques sont utilisées dans le cadre des monnaies cryptographiques, il est possible d'inscrire l'adresse (adr) correspondante à la clé publique (pub0) plutôt que la clé publique (pub0) elle-même.

Dans cette variante les étapes (11) et (12) du procédé sont différentes. Cette fois ci, au lieu d'écrire la clé publique pub0, Brian inscrit l'adresse (adr) correspondante à la clé publique pub0. Le calcul de l'adresse (adr) dépend de la monnaie cryptographique utilisée mais l'adresse (adr) dépend toujours de la clé publique pub0.

La vérification effectuée par la 1ère entité 31 à l'étape (13) est modifié, car ce n'est plus la clé publique pub0 qui est inscrite mais l'adresse (adr) de monnaie cryptographique. Dès lors la vérification effectuée consiste à recalculer cette adresse (adr) et vérifier l'égalité entre l'adresse (adr) inscrite et l'adresse calculée.La vérification effectuée en (16) par le propriétaire est également différente car dans ce cas, le propriétaire du support physique 100 vérifie l'adresse pub0 et non pas la clé publique pub0.

### Troisième mode de réalisation

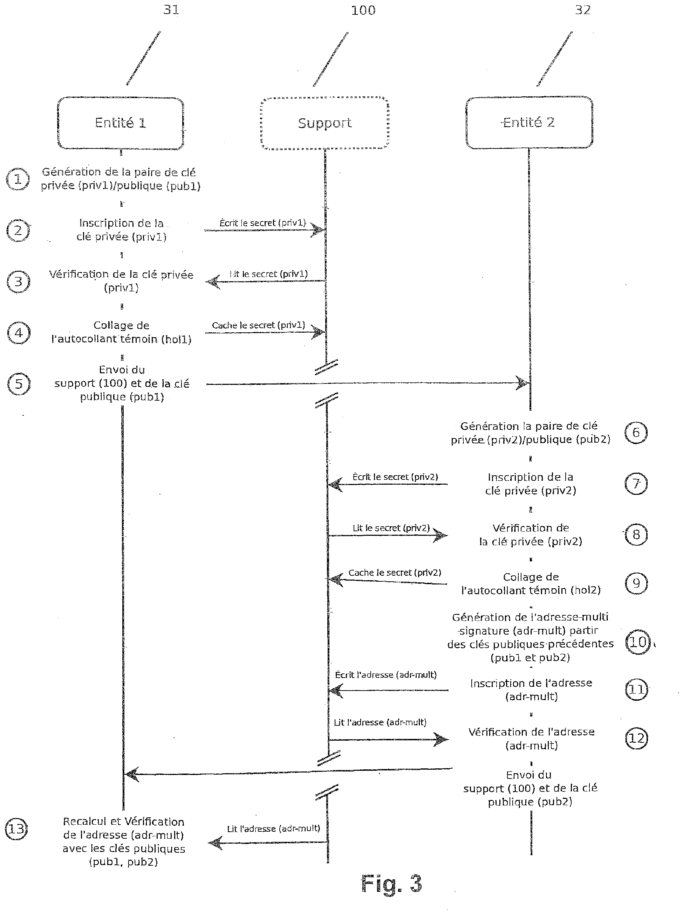

La figure 3 illustre une réalisation représentative de l'invention utilisant deux entités de gestion 31 et 32 pour fournir une adresse multi-signature (adr-mult).

Dans cette variante, une adresse multi-signature (adr-mult) est générée à partir de la première clé publique utilisateur (pub1) et de la deuxième clé publique utilisateur (pub2), cette adresse multi-signature (adr-mult) étant gravée (11) sur le support physique.

Dans cette variante du procédé, les étapes de la génération et de l'inscription des clés publiques et privées présentées dans de schéma de la Figure 3 sont similaires à celles présentées dans de schéma de la Figure 2.

Toujours dans le cadre des monnaies cryptographiques, il est possible de faire dépendre l'adresse (adr-mult) directement des clés publiques pub1 et pub2 sans passer par la génération d'une troisième clé publique pub0. Dans ce cas l'adresse (adr-mult) inscrite sur le support physique est une adresse dite « multi signatures » 2 sur 2, ce qui veut dire que pour signer une transaction, les 2 clés privées priv1 et priv2 inscrites sous les parties cachées sont utilisées directement pour signer une transaction. Il n'y a pas de génération d'une 3e clé privée, dérivée des clés privées priv1 et priv2.

Les étapes différentes de ce mode de réalisation préféré sont, comme pour la variante de la Figure 2, les étapes (11), (12), (13) et (16). Les étapes (11) et (12) sont différentes car ce n'est pas la clé publique pub0 qui est inscrite sur le support, mais l'adresse multi-signatures (adr-mult) correspondante au deux clés publiques pub1 et pub2. En l'étape (11), Brian inscrit l'adresse (adr-mult) correspondante aux clés publiques pub1 et pub2. Et en l'étape (12) Bob vérifie cette adresse (adr-mult).

La vérification effectuée par la 1ère entité 31 à l'étape (13) est modifiée, car ce n'est plus la clé publique pub0 qui est doit être vérifiée mais l'adresse multi-signature (adr-mult) de monnaie cryptographique. Dès lors, comme pour la variante de la Figure 2, la vérification effectuée consiste à recalculer l'adresse (adr-mult) et vérifier l'égalité entre l'adresse inscrite (adr-mult) et l'adresse calculée.

La vérification effectuée en (16) est différente car dans ce cas, le propriétaire du support physique 100 ne vérifie pas la clé publique pub0 mais l'adresse multi-signature (adr-mult) correspondante aux clés publiques pub1 et pub2.

### Quatrième mode de réalisation

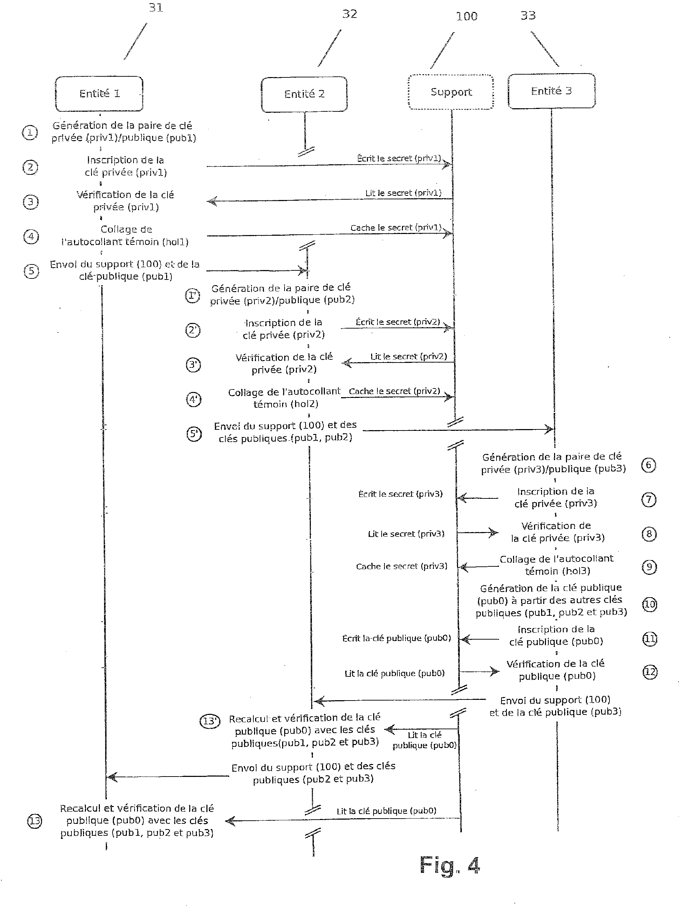

La figure 4 illustre une réalisation représentative de l'invention utilisant trois entités de gestion 31,32 et33 pour fournir une dernière clé publique utilisateur (pub0).

Dans cette variante, le système comprend en outre:
une troisième entité de gestion (33) configurée pour générer une troisième paire de clés cryptographiques asymétriques comprenant une troisième clé publique utilisateur (pub3) et une troisième clé privée utilisateur (priv3),
la troisième entité de gestion (33) comportant :
   - un troisième ordinateur (43) dans lequel des instructions de programme sont mémorisées, lesquelles instructions, lorsqu'elles sont lues par un troisième processeur de données, font que le troisième ordinateur (43) mémorise la troisième clé publique utilisateur (pub3) dans une troisième mémoire d'enregistrement et génère la troisième première clé privée utilisateur (priv3),
   - un troisième dispositif (53) associé au troisième ordinateur (43) configuré pour inscrire la troisième clé privée utilisateur(priv3) sur le support physique, et
   - un troisième moyen pour vérifier la troisième clé privée utilisateur (priv3) inscrite et apposer un troisième élément occultant témoin (hol3) sur le support physique pour occulter la troisième clé privée utilisateur (priv3) et la rendre non-visible,
   - le troisième ordinateur (43) étant en outre configuré pour la générer la dernière clé publique utilisateur (pub0) à partir de la première clé publique utilisateur (pub1), de la deuxième clé publique utilisateur (pub2) et de la troisième clé publique utilisateur (pub3), et permettre l'inscription de la dernière clé publique utilisateur (pub0) sur le support physique par le troisième dispositif (53).

Comme le montre la Figure 7, les entités 31,32 et 33 ont chacune besoin une machine à graver 51,52,53 reliée à un ordinateur 41,42,43 pour réaliser l'inscription sur la barre en métal. Cet ordinateur 41,42,43 n'est connecté à aucun réseau pour éviter les cyberattaques. Les entités 31,32 et 33 peuvent utiliser le même type de matériel 41,42,43,51,52,53 et de logiciel.

Chaque entité 31,32 et 33 possède des hologrammes différents qu'elle collera sur la barre en métal.

Dans le cas de 3 entités, il peut y avoir 6 employés impliqués, soit à titre d'exemple :
- Alice et Albert, employés de la première entité 31.
- Charlie et Clara, employés de la seconde entité 32.
- Bob et Brian, employés de la troisième entité 33.

### Inscription des clés cryptographiques

Les étapes de la génération et de l'inscription des clés publiques et privées sont présentées dans de schéma de la Figure 4.
(1) Alice génère une paire de clés publique/privée sur l'ordinateur à l'aide du logiciel.
(2) Alice prend une barre en métal 100 et inscrit la clé privée (priv1).
(3) Albert rentre cette clé privée dans le logiciel. Celui-ci va régénérer la clé publique (pub1). Albert vérifie que la clé publique générée à partir de la clé privée et la clé publique (pub1) générée par Alice sont les mêmes.
(4) Une fois cette vérification effectuée, Alice et Albert collent l'autocollant holographique témoin (hol1) de leur entité 31 sur la clé privée (priv1).
(5) Alice et Albert envoient la barre de métal et la clé publique (pub1) à la seconde entité 32.

La seconde entité 32 effectue ensuite un processus similaire.
(1') Charlie génère une paire de clés publique/privée,
(2') Charlie inscrit la clé privée (priv2), puis
(3') Clara vérifie à l'aide du logiciel que la clé gravée à bien la même clé publique (pub2) que celle de Brian.
(4') Charlie et Clara collent l'autocollant holographique témoin (hol2) de leur entité 32 sur la clé privée (priv2).
(5') Puis Charlie et Clara envoient la barre de métal et les clés publiques (pub1 et pub2) à la troisième entité 33.

La troisième entité 33 effectue ensuite un processus similaire.
(6) Brian génère une paire de clés publique/privée (priv3, pub3),
(7) Brian inscrit la clé privée (priv3), puis
(8) Bob vérifie à l'aide du logiciel que la clé gravée à bien la même clé publique (pub3) que celle de Brian.
(9) Bob et Brian collent l'autocollant holographique témoin (hol3) de leur entité 33 sur la clé privée (priv3).
(10) Puis utilisant les trois clés publiques pub1 , pub2 et pub3, Brian dérive en utilisant le logiciel une quatrième clé publique (pub0).
(11) Brian inscrit cette clé publique (pub0) sur la barre en métal 100.
(12) Dans la dernière étape Bob vérifie, à partir des clés publiques pub1 , pub2 et pub3, que la clé publique pub0 a été gravée correctement sur la barre en métal 100. Pour cela il rentre, à son tour, les clés publiques pub1 , pub2 et pub3 dans le logiciel et il s'assure que la clé publique pub0 gravée sur la barre en métal 100 est la bonne. Bob et Brian envoient la barre de métal et la clé publique (pub3) à la deuxième entité.
(13') Les employés Charlie et Clara de l'entité 32 doivent calculer la clé publique (pub0) en utilisant les clés publiques pub1 , pub2 et pub3 et vérifier que la clé publique (pub0) inscrite sur la barre en métal 100 est bien la même que celle qu'ils ont calculée. Charlie et Clara envoient la barre de métal et les clés publiques (pub2 et pub3 ) à la première entité.
(13) Les employés Alice et Albert de l'entité 31 doivent également calculer la clé publique (pub0) en utilisant les clés publiques pub1 , pub2 et pub3 et vérifier que la clé publique (pub0) inscrite sur la barre en métal 100 est bien la même que celle qu'ils ont calculée.

Dès lors, une fois que le processus de gravure s'est terminé correctement, les employés de l'entité 31 scellent la barre en métal 100 dans une protection en plastique.

Ce processus permet de créer une barre en métal 100 sur laquelle est inscrit par 3 entités différentes, 3 clés privées (priv1, priv2 et priv3) cachées par 3 autocollants holographiques témoins (hol1, hol2 et hol3) ainsi qu'une clé publique (pub0) correspondante à la combinaison des 3 clés privées (priv1, priv2 et priv3) cachées. A aucun moment les 3 clés privées (priv1, priv2 et priv3) n'ont été visible en même temps par une seule personne.

### Récupération de la clé privée

(14) Le propriétaire de la barre en métal 100 peut vérifier que les secrets (priv1, priv2 et priv3) de la barre 100 n'ont pas été révélés en vérifiant l'intégrité des autocollants holographiques témoins (hol1 hol2 et hol3).
(15) Lorsque le propriétaire souhaite récupérer la clé privée priv0 correspondante à la clé publique pub0 gravée sur sa barre 100, il doit retirer les trois autocollants holographiques témoins (hol1 hol2 et hol3). Les secrets (priv1, priv2 et priv3) sont alors visibles.
(16) Le logiciel pour la récupération des clés privées demande au propriétaire de la barre 100 de rentrer les secrets (priv1, priv2 et priv3) inscrits sur la barre en métal 100. Le logiciel génère ensuite la clé privée priv0 correspondante à la clé publique pub0. C'est seulement à l'étape de la récupération que la clé privée priv0 a été calculée. Elle n'a, auparavant, jamais été présente sur aucun ordinateur, ce qui veut dire que ni les employés de l'entité 31, ni les employés des entités 32 ou 33 n'ont pu voir cette clé privée priv0.

### Cinquième mode de réalisation

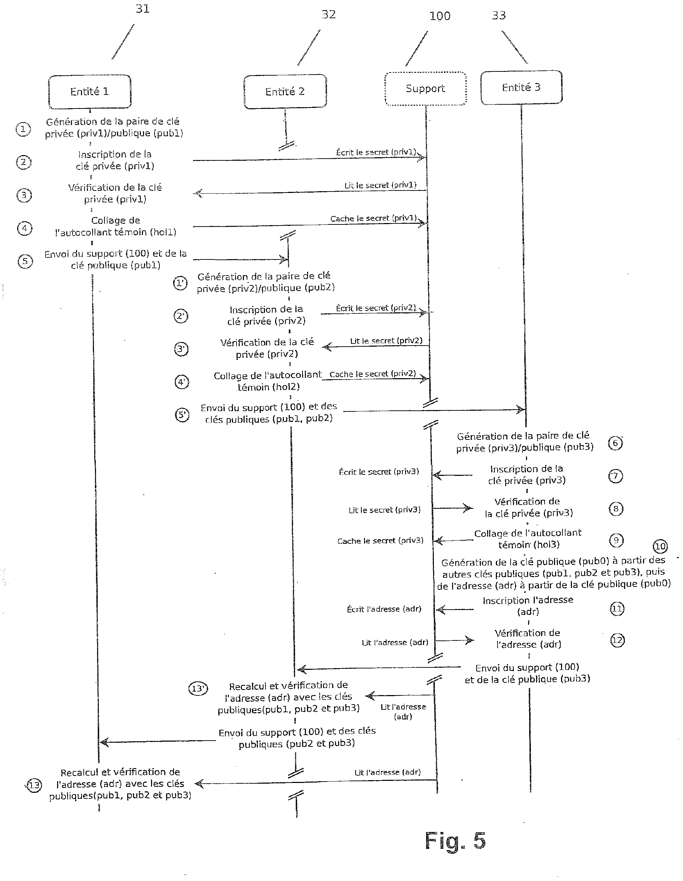

La figure 5 illustre une réalisation représentative de l'invention utilisant trois entités de gestion 31, 32 et 33 pour fournir une dernière clé publique utilisateur (pub0) et une adresse cryptographique (adr).

Dans cette variante, une dernière clé publique utilisateur (pub0) est générée et une adresse cryptographique (adr) est gravée (11) sur le support physique. La dernière clé publique utilisateur (pub0) permet de générer l' adresse cryptographique (adr), cette adresse (adr) étant calculée à partir de la dernière clé publique utilisateur (pub0) et étant gravée sur le support physique.

Dans cette variante du procédé, les étapes de la génération et de l'inscription des clés publiques et privées présentées dans de schéma de la Figure 5 sont similaires à celles présentées dans de schéma de la Figure 4.

Si les clés cryptographiques sont utilisées dans le cadre des monnaies cryptographiques, il est possible d'inscrire l'adresse (adr) correspondante à la clé publique (pub0) plutôt que la clé publique (pub0) elle-même.

Dans cette variante les étapes (11) et (12) du procédé sont différentes. Cette fois ci, au lieu d'écrire la clé publique pub0, Brian inscrit l'adresse (adr) correspondante à la clé publique pub0. Le calcul de l'adresse (adr) dépend de la monnaie cryptographique utilisée mais l'adresse (adr) dépend toujours de la clé publique pub0.

La vérification effectuée par les première et deuxième entités 31 et 32 à l'étape (13' et 13) est modifié, car ce n'est plus la clé publique pub0 qui est inscrite mais l'adresse (adr) de monnaie cryptographique. Dès lors la vérification effectuée consiste à recalculer cette adresse (adr) et vérifier l'égalité entre l'adresse (adr) inscrite et l'adresse calculée.

La vérification effectuée en (16) par le propriétaire est également différente car dans ce cas, le propriétaire du support physique 100 vérifie l'adresse (adr) et non pas la clé publique pub0.

### Sixième mode de réalisation

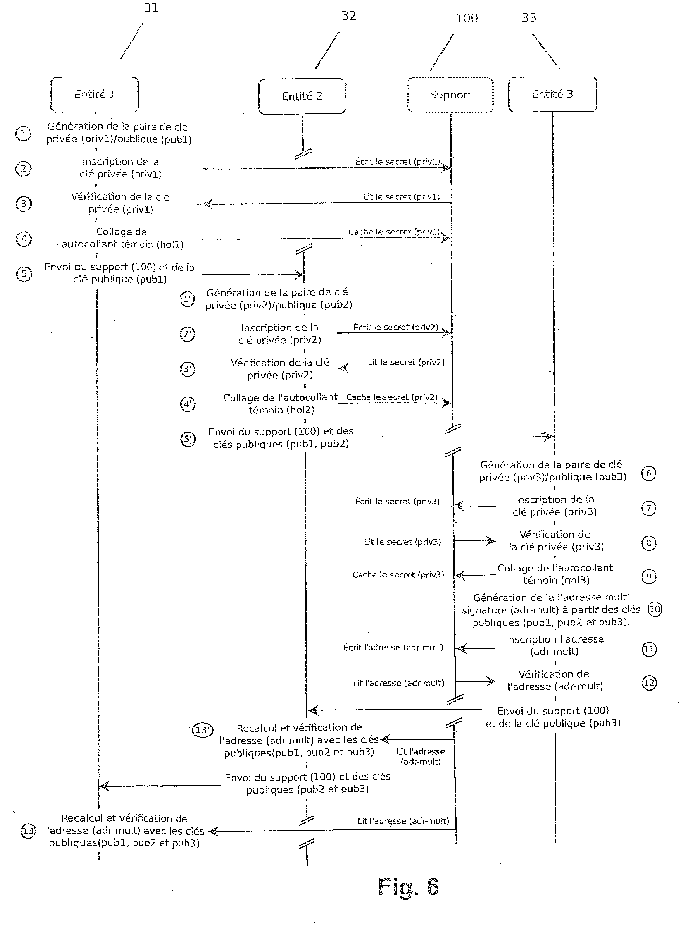

La figure 6 illustre une réalisation représentative de l'invention utilisant trois entités de gestion 31,32 et 33 pour fournir une adresse multi-signature (adr-mult).

Dans cette variante, une adresse multi-signature (adr-mult) est générée à partir de la première clé publique utilisateur (pub1), de la deuxième clé publique utilisateur (pub2), et de la troisième clé publique utilisateur (pub3), cette adresse multi-signature (adr-mult) étant gravée (11) sur le support physique.

Dans cette variante du procédé, les étapes de la génération et de l'inscription des clés publiques et privées présentées dans de schéma de la Figure 6 sont similaires à celles présentées dans de schéma de la Figure 5.

Toujours dans le cadre des monnaies cryptographiques, il est possible de faire dépendre l'adresse (adr-mult) directement des clés publiques pub1 pub2 et pub3 sans passer par la génération d'une quatrième clé publique pub0. Dans ce cas l'adresse (adr-mult) inscrite sur le support physique est une adresse dite « multi signatures » 3 sur 3, ce qui veut dire que pour signer une transaction, les 3 clés privées priv1, priv2 et priv3 inscrites sous les parties cachées sont utilisées directement pour signer une transaction. Il n'y a pas de génération d'une 4e clé privée, dérivée des clés privées priv1, priv2 et priv3.

Les étapes différentes de ce mode de réalisation préféré sont, comme pour la variante de la Figure 5, les étapes (11), (12), (13) et (16). Les étapes (11) et (12) sont différentes car ce n'est pas la clé publique pub0 qui est inscrite sur le support, mais l'adresse multi-signatures (adr-mult) correspondante au trois clés publiques pub1, pub2 et pub3. En l'étape (11), Brian inscrit l'adresse (adr-mult) correspondante aux clés publiques pub1, pub2 et pub3. Et en l'étape (12) Bob vérifie cette adresse (adr-mult).

La vérification effectuée par les première et deuxième entités 31 et 32 à l'étape (13', 13) est modifiée, car ce n'est plus la clé publique pub0 qui est doit être vérifiée mais l'adresse multi-signature (adr-mult) de monnaie cryptographique. Dès lors, comme pour la variante de la Figure 5, la vérification effectuée consiste à recalculer l'adresse (adr-mult) et vérifier l'égalité entre l'adresse inscrite (adr-mult) et l'adresse calculée.

La vérification effectuée en (16) est différente car dans ce cas, le propriétaire du support physique 100 ne vérifie pas la clé publique pub0 mais l'adresse multi-signature (adr-mult) correspondante aux clés publiques pub1,pub2 et pub3.

### Autres modes de réalisation à Secrets Multiples

Le nombre de secrets du mode de réalisation préféré fait intervenir 2 ou 3 entités, avec chacune une signature. Cependant, le nombre d'entités impliquées dans la réalisation peut être plus important. Ce nombre n'est limité que par l'espace disponible sur le support physique.

Dans ce cas le processus est très similaire. Si n entités sont impliquées dans la réalisation, les n-1 premières entités effectuent les étapes (1) à (5) les unes à la suite des autres et la dernière entité complète la réalisation par les étapes (6) à (12).

L'étape (13) de vérification de la clé publique ou de l'adresse inscrite sur le support physique doit être effectuée par toutes les entités qui ont générées une clé privée.

Dans cette variante, l'étape de vérification par le propriétaire est également différente, car elle nécessite cette fois la combinaison de n clés privées.

Les n secrets peuvent être utilisés pour générer :
1. Une clé publique (comme pour le mode de réalisation de la Figure 1),
2. L'adresse d'une clé publique (comme pour la variante de la Figure 2),
3. L'adresse multi-signature de plusieurs clés publiques (comme pour la variante de la Figure 3).

### Support physique

La figure 8 est une vue schématique d'un support physique 100 dans une réalisation de l'invention,

Ce support physique 100 comprend :
- une première clé privée utilisateur (priv1) inscrite sur le support, la première clé privée utilisateur (priv1) étant associée à une première clé publique utilisateur (pub1) pour former une première paire de clés cryptographiques asymétriques,
- un premier élément occultant témoin (hol1) pour occulter la première clé privée utilisateur (priv1) et la sceller, ladite première clé privée utilisateur (priv1) n'étant accessible que par rupture visible du premier élément occultant témoin (hol1) ;
- une deuxième clé privée utilisateur (priv2) inscrite sur le support, la deuxième clé privée utilisateur (priv2) étant associée à une deuxième clé publique utilisateur (pub2) pour former une deuxième paire de clés cryptographiques asymétriques,
- un deuxième élément occultant témoin (hol2) pour occulter la deuxième clé privée utilisateur (priv2) et la sceller, la deuxième clé privée utilisateur (priv2) n'étant accessible que par rupture visible du deuxième élément occultant témoin (hol2); et
- une dernière clé publique utilisateur (pub0) inscrite sur le support, celle-ci étant générée à partir de la première clé publique utilisateur (pub1) et de la deuxième clé publique utilisateur (pub2).

Au lieu de la dernière clé publique utilisateur (pub0), une adresse cryptographique peut aussi être inscrite sur le support.

Le support 100 peut être formé d'une barre en métal ou en alliage de métaux, telle qu'une barre en or, platine, argent ou acier. Tout autre support peut être utilisé pour inscrire les clés privées. Par exemple, du bois, du verre, de la pierre, du plastique, de la céramique, du papier, etc...

L'inscription peut utiliser des caractères alphanumériques, des codes-barres, des QR codes ou toute autre représentation possible.

Au lieu d'inscrire les codes sur une barre en métal directement, il est possible d'inscrire les différents codes (clés publiques, clés privées ou adresses) sur une ou plusieurs partie(s) mobile(s) en métal.

D'autres variantes du procédé sont possibles et sont décrites dans la partie suivante

### Supports Multiples

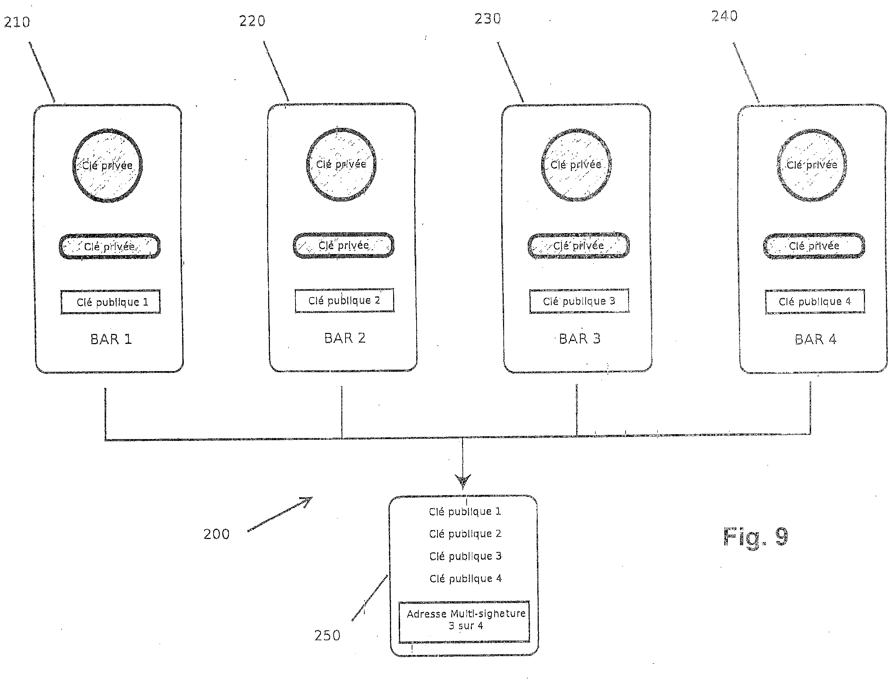

La figure 9 est une vue schématique d'un support physique 200 dans une autre réalisation de l'invention.

Cette variante de réalisation est une extension de la méthode de réalisation préférée décrite aux Figures 1 à 6 (ou la variante à Secrets Multiples pour clé publique). Elle utilise les méthodes précédentes pour créer plusieurs supports physiques 210,220,230,240.

Le support 200 est formé de plusieurs éléments séparés 210,220,230,240 et d'une base 250, chaque élément séparé 210,220,230,240 possède ses propres clés privées (priv1, priv2) et sa propre clé publique (pub1), une adresse multi-signature de monnaie cryptographique commune aux éléments séparés 210,220,230,240 étant générée et inscrite sur la base 250.

Chaque support 210,220,230,240 possédant sa propre clé publique, il est possible de générer une adresse multi-signature de monnaie cryptographique commune à plusieurs supports physiques. Par exemple, si 3 éléments de supports physiques sont utilisés il est possible de générer une adresse multi-signature (2 sur 3) correspondante aux 3 clés publiques. Cette adresse peut donc maintenant être inscrite sur un 4e élément ou base du support physique.

Dans ce cas, le processus est le suivant : (1) *n* éléments de supports physiques sont créés par les 2 ou 3 entités grâce au mode de réalisation préféré décrit en Figure 1 (ou variante à Secrets Multiples).

(2) Alice de l'entité 31 renseigne les *n* clés publiques et indique le nombre de signatures *s* nécessaires dans le logiciel qui génère l'adresse multi-signature de monnaie cryptographique.

Alice inscrit cette adresse sur un support physique.

(3) Albert renseigne les clés publiques et le nombre de signature nécessaire dans le logiciel qui génère l'adresse. Albert vérifie que l'adresse est la même que celle inscrite par Alice sur le support physique.

(4) La deuxième entité vérifie que l'adresse inscrite sur le support physique, correspond bien aux clés publiques inscrites sur les n supports physiques ainsi qu'au nombre s de signatures nécessaires.

La phase de récupération des jetons de monnaie cryptographique déposés sur l'adresse multi-signature nécessite les mêmes étapes du mode de réalisation préféré présenté en détail ci-dessus en Figure 1.

Dans le cas d'une adresse multi-signature s parmi n, ces étapes doivent être effectuées par s possesseurs de support physique dont les clés publiques ont été utilisées pour générer l'adresse multi-signature.

C'est-à-dire s'il y a 3 supports physiques et que l'adresse multi-signature nécessite 2 signatures sur 3, les étapes (13) (14) et (15) doivent être effectuées par 2 des possesseurs des supports physiques. Une étape supplémentaire (16) s'ajoute, après avoir récupéré les clés privées. Les 2 possesseurs des supports physiques doivent générer une transaction (connaissant les 3 clés publiques) et chacun d'entre eux doit signer cette transaction pour transférer les jetons de monnaie cryptographique.

La présente invention n'est en aucune manière limitée aux formes de réalisation décrites à titre d'exemple et représentées dans les figures. On pourra y apporter de nombreuses modifications de détails, de formes, et de dimensions sans sortir pour cela du cadre de l'invention. La présente invention a été décrite en relation avec des modes de réalisations spécifiques, qui ont une valeur purement illustrative et ne doivent pas être considérés comme limitatifs. Par exemple, d'autres applications du procédé, du système et du support physique de l'invention sont possibles dans les industries telles que l'automobile, le luxe, ou la livraison (Shipping), l'immobilier (Real Estate), le juridique notarial (legal), ou l'IP (Internet Protocol),etc. Les numéros de référence dans les revendications ne limitent pas leurs portées.

## Revendications

1. Procédé d'inscription et de stockage sécurisé de clés cryptographiques sur un support physique (100,200), ledit procédé comprenant les étapes suivantes :
a) à partir d'une première entité de gestion (31), la génération (1) d'une première paire de clés cryptographiques asymétriques comprenant une première clé publique utilisateur (pub1) et une première clé privée utilisateur (priv1), comprenant de :
- mémoriser (1) la première clé publique utilisateur (pub1) dans une première mémoire d'enregistrement (41) ;
- inscrire (2) la première clé privée utilisateur (priv1) sur un support physique (100,200), et
- vérifier (3) la première clé privée utilisateur (priv1) inscrite et apposer (4) un premier élément occultant témoin (hol1) sur le support physique pour occulter la première clé privée utilisateur (priv1) et la sceller, ladite première clé privée utilisateur (priv1) n'étant accessible que par rupture visible dudit premier élément occultant témoin (hol1) ;
b) la génération (6) d'une deuxième paire de clés cryptographiques asymétriques comprenant une deuxième clé publique utilisateur (pub2) et une deuxième clé privée utilisateur (priv2), comprenant de :
- mémoriser la deuxième clé publique utilisateur (pub2) dans une deuxième mémoire d'enregistrement (42) ;
- inscrire (7) la deuxième clé privée utilisateur (priv2) sur le support physique, et
- vérifier (8) la deuxième clé privée utilisateur (priv2) inscrite et apposer (9) un deuxième élément occultant témoin (hol2) sur le support physique pour occulter la deuxième clé privée utilisateur (priv2) et la sceller, ladite deuxième clé privée utilisateur (priv2) n'étant accessible que par rupture visible dudit deuxième élément occultant témoin (hol2) ;
c) l'envoi (5) du support physique à une deuxième entité de gestion (32), la génération (6) de la deuxième paire de clés cryptographiques asymétriques étant effectuée à partir de ladite deuxième entité de gestion (32), ledit procédé comprenant en outre les étapes suivantes :
d) la génération (10) d'au moins une dernière clé publique utilisateur (pub0) et/ou d'au moins une adresse cryptographique (adr, adr-mult) à partir de la première clé publique utilisateur (pub1) et de la deuxième clé publique utilisateur (pub2),
e) l'inscription (11) de ladite au moins une dernière clé publique utilisateur (pub0) et/ou de ladite au moins une adresse cryptographique (adr, adr-mult) sur le support physique, et la vérification (12, 13) de celle-ci, et
f) la récupération finale des clés privées (priv1,priv2) comportant la génération d'une dernière clé privée utilisateur (priv0) correspondant à la dernière clé publique utilisateur (pub0) inscrite sur le support physique et/ou à ladite au moins une adresse cryptographique (adr, adr-mult) inscrite sur le support physique ,
dans lequel la première clé privée utilisateur (priv1) est gravée (3) sur le support physique (100,200) par un premier appareil de gravure (51) et la deuxième clé privée utilisateur (priv2) est gravée (7) sur le support physique (100,200) par un deuxième appareil de gravure (52) distinct du premier appareil de gravure (51).

2. Procédé d'inscription et de stockage sécurisé de clés cryptographiques sur un support physique selon la revendication 1, dans lequel ladite au moins une dernière clé publique utilisateur (pub0) est gravée (11) sur le support physique (100,200) et/ou ladite au moins une adresse cryptographique (adr, adr-mult) est gravée (11) sur le support physique (100,200).

3. Procédé d'inscription et de stockage sécurisé de clés cryptographiques sur un support physique selon l'une des revendications 1 ou 2, dans lequel la dernière clé publique utilisateur (pub0) fait partie d'une troisième paire cryptographique asymétrique comprenant la dernière clé publique utilisateur (pub0) et la dernière clé privée utilisateur (priv0).

4. Procédé d'inscription et de stockage sécurisé de clés cryptographiques sur un support physique selon l'une quelconque des revendications 1 à 3, dans lequel l' étape de récupération des clés privées comprend de :
- vérifier (14) l'intégrité des premiers et deuxièmes éléments occultant témoins (hol1, hol2),
- lire (15) les première et deuxième clés privées utilisateur (priv1, priv2) en retirant les premier et deuxième éléments occultant témoins (hol1, hol2), et
- à partir des première et deuxième clés privées utilisateur (priv1, priv2) inscrites sur le support, générer (16) ensuite la dernière clé privée utilisateur (priv0) correspondant à la dernière clé publique utilisateur (pub0).

5. Procédé d'inscription et de stockage sécurisé de clés cryptographiques sur un support physique selon l'une quelconque des revendications 1 à 4, dans lequel la dernière clé publique utilisateur (pub0) permet de générer ladite au moins une adresse cryptographique (adr), cette adresse (adr) étant calculée à partir de la dernière clé publique utilisateur (pub0) et étant inscrite sur le support physique.

6. Procédé d'inscription et de stockage sécurisé de clés cryptographiques sur un support physique selon l'une quelconque des revendications 1 à 4, dans lequel ladite au moins une adresse cryptographique (adr-mult) est une adresse multi-signature (adr-mult) générée (10) à partir de la première clé publique utilisateur (pub1) et de la deuxième clé publique utilisateur (pub2), cette adresse multi-signature (adr-mult) étant gravée (11) sur le support physique.

7. Procédé d'inscription et de stockage sécurisé de clés cryptographiques sur un support physique selon l'une des revendications 5 ou 6, dans lequel ledit procédé comporte une étape de récupération des clés privées qui comprend de :
- vérifier l'intégrité des premiers et deuxièmes éléments occultants témoins (hol1, hol2),
- lire les première et deuxième clés privées utilisateur (priv1, priv2) en retirant les premier et deuxième éléments occultants témoins (hol1, hol2), et
- à partir les première et deuxième clés privées utilisateur (priv1, priv2) inscrites sur le support, recalculer ladite au moins une adresse cryptographique (adr) et vérifier ensuite sa correspondance avec l'adresse cryptographique (adr) inscrite sur le support physique pour permettre d'accéder à et/ou de retirer une crypto-monnaie d'un compte.

8. Procédé d'inscription et de stockage sécurisé de clés cryptographiques sur un support physique selon l'une quelconque des revendications 1 à 7, dans lequel ledit procédé comprend :
f) l'envoi du support physique (100,200) à une troisième entité de gestion (33),
g) à partir de la troisième entité de gestion (33), la génération (6) d'une troisième paire de clés cryptographiques asymétriques comprenant une troisième clé publique utilisateur (pub3) et une troisième clé privée utilisateur (priv3), comprenant de :
- mémoriser la troisième clé publique utilisateur (pub3) dans une troisième mémoire d'enregistrement (43) ;
- inscrire (7) la troisième clé privée utilisateur (priv3) sur le support physique, et
- vérifier (8) la troisième clé privée utilisateur (priv3) inscrite et apposer (9) un troisième élément occultant témoin (hol3) sur le support physique pour occulter la troisième clé privée utilisateur (priv3) et la sceller, ladite troisième clé privée utilisateur (priv3) n'étant accessible que par rupture visible dudit troisième élément occultant témoin (hol3);
h) la génération (10) de la dernière clé publique utilisateur (pub0) et/ou d'au moins une adresse cryptographique (adr, adr-mult) à partir de la première clé publique utilisateur (pub1), de la deuxième clé publique utilisateur (pub2) et de la troisième clé publique utilisateur (pub3), et
i) l'inscription (11) de ladite dernière clé publique utilisateur (pub0) et/ou de ladite au moins une adresse cryptographique (adr, adr-mult) sur le support physique, et la vérification (12,13) de celle-ci.

9. Procédé d'inscription et de stockage sécurisé de clés cryptographiques sur un support physique selon la revendication 8, dans lequel l' étape de récupération des clés privées comprend de :
- vérifier (16) l'intégrité des premier, deuxième et troisième éléments occultants témoins (hol1, hol2, hol3),
- lire les première, deuxième et troisième clés privées utilisateur (priv1, priv2, priv3) en retirant premier, deuxième et troisième éléments occultants témoins, et
- à partir les première, deuxième et troisième clés privées utilisateur (priv1, priv2, priv3) inscrites sur le support, générer ensuite la dernière clé privée utilisateur (priv0) correspondant à la dernière clé publique utilisateur (pub0) et/ou à ladite au moins une adresse cryptographique (adr, adr-mult).

10. Procédé d'inscription et de stockage sécurisé de clés cryptographiques sur un support physique selon l'une des revendications 8 ou 9, dans lequel la dernière clé publique utilisateur (pub0) permet de générer ladite au moins une adresse cryptographique (adr), cette adresse (adr) étant calculée à partir de la dernière clé publique utilisateur (pub0) et étant gravée sur le support physique.

11. Procédé d'inscription et de stockage sécurisé de clés cryptographiques sur un support physique selon l'une quelconque des revendications 1 à 10, dans lequel chacun desdits éléments occultant (hol1, hol2, hol3) est un autocollant holographique témoin (hol1, hol2, hol3).

12. Procédé d'inscription et de stockage sécurisé de clés cryptographiques sur un support physique selon l'une quelconque des revendications 1 à 11, dans lequel le procédé comprend la génération d'une pluralité de *n* clés cryptographiques asymétriques, à partir de *n* entités de gestion distinctes ,avec *n*>2, lesdites clés comprenant chacune une combinaison de clé publique utilisateur avec une clé privée utilisateur, et/ou une adresse de clé publique , et/ou une adresse multi-signature de plusieurs clés publiques, les *n*-1 premières entités de gestion effectuant les étapes (1) à (5) les unes à la suite des autres et la *n*^{ème} entité de gestion complétant la réalisation des étapes (6) à (13).

13. Système d'inscription et de stockage sécurisé de clés cryptographiques sur un support physique pour la mise en œuvre du procédé selon l'une des revendications 1 à 12, le système comprenant :
une première entité de gestion (31) configurée pour générer une première paire de clés cryptographiques asymétriques comprenant une première clé publique utilisateur (pub1) et une première clé privée utilisateur (priv1),
la première entité de gestion (31) comportant :
- un premier ordinateur (41) dans lequel des instructions de programme sont mémorisées, lesquelles instructions, lorsqu'elles sont lues par un premier processeur de données, font que le premier ordinateur génère la première clé privée utilisateur (priv1) et mémorise la première clé publique utilisateur (pub1) dans une première mémoire d'enregistrement,
- un premier dispositif (51) associé au premier ordinateur configuré pour inscrire la première clé privée utilisateur (priv1) sur un support physique (100,200), et
- un premier moyen pour vérifier la première clé privée utilisateur (priv1) inscrite et apposer un premier élément occultant témoin (hol1) sur le support physique pour occulter la première clé privée utilisateur (priv1) et la rendre non-visible,
le système comprenant en outre :
une deuxième entité de gestion (32) configurée pour générer une deuxième paire de clés cryptographiques asymétriques comprenant une deuxième clé publique utilisateur (pub2) et une deuxième clé privée utilisateur (priv2), la deuxième entité de gestion (32) comportant :
- un deuxième ordinateur (42) dans lequel des instructions de programme sont mémorisées, lesquelles instructions, lorsqu'elles sont lues par un deuxième processeur de données, font que le deuxième ordinateur (42) est configuré pour mémoriser la deuxième clé publique utilisateur (pub2) dans une deuxième mémoire d'enregistrement ;
- un deuxième dispositif (52) associé au deuxième ordinateur pour inscrire la deuxième clé privée utilisateur (priv2) sur le support physique, et
- un deuxième moyen pour vérifier la deuxième clé privée utilisateur (priv2) inscrite et apposer un deuxième élément occultant témoin (hol2) sur le support physique pour occulter la deuxième clé privée utilisateur (priv2) et la rendre non-visible,
- le deuxième ordinateur (42) étant en outre configuré pour générer une dernière clé publique utilisateur (pub0) à partir de la première clé publique utilisateur (pub1) et de la deuxième clé publique utilisateur (pub2), et pour permettre l'inscription de la dernière clé publique utilisateur (pub0) sur le support physique par le deuxième dispositif (52) et la vérification de celle-ci , - ledit premier dispositif (51) comprenant un premier appareil de gravure (51)
configuré pour graver la première clé privée utilisateur (priv1) sur le support physique (100,200), et ledit deuxième dispositif (52) comprenant un deuxième appareil de
gravure (52) distinct du premier appareil de gravure (51) configuré pour graver la deuxième clé privée utilisateur (priv2) sur le support physique (100,200).

14. Système d'inscription et de stockage sécurisé de clés cryptographiques sur un support physique selon la revendication 13, le système comprenant en outre:
une troisième entité de gestion (33) configurée pour générer une troisième paire de clés cryptographiques asymétriques comprenant une troisième clé publique utilisateur (pub3) et une troisième clé privée utilisateur (priv3),
la troisième entité de gestion (33) comportant :
- un troisième ordinateur (43) dans lequel des instructions de programme sont mémorisées, lesquelles instructions, lorsqu'elles sont lues par un troisième processeur de données, font que le troisième ordinateur mémorise la troisième clé publique utilisateur (pub3) dans une troisième mémoire d'enregistrement et génère la troisième première clé privée utilisateur (priv3),
- un troisième dispositif (53) associé au troisième ordinateur (43) configuré pour inscrire la troisième clé privée utilisateur(priv3) sur le support physique (100,200), et
- un troisième moyen pour vérifier la troisième clé privée utilisateur (priv3) inscrite et apposer un troisième élément occultant témoin (hol3) sur le support physique pour occulter la troisième clé privée utilisateur (priv3) et la rendre non-visible,
- le troisième ordinateur (43) étant en outre configuré pour la générer la dernière clé publique utilisateur (pub0) à partir de la première clé publique utilisateur (pub1), de la deuxième clé publique utilisateur (pub2) et de la troisième clé publique utilisateur (pub3), et permettre l'inscription de la dernière clé publique utilisateur (pub0) sur le support physique par le troisième dispositif (53).

15. Support physique (100,200) produit suivant le procédé d'inscription et de stockage sécurisé de clés cryptographiques selon l'une des revendications 1 à 12, ledit support (100,200) comprenant :
- une première clé privée utilisateur (priv1) inscrite sur le support, la première clé privée utilisateur (priv1) étant associée à une première clé publique utilisateur (pub1) pour former une première paire de clés cryptographiques asymétriques,
- un premier élément occultant témoin (hol1) pour occulter la première clé privée utilisateur (priv1) et la sceller, ladite première clé privée utilisateur (priv1) n'étant accessible que par rupture visible dudit premier élément occultant témoin (hol1) ;
- une deuxième clé privée utilisateur (priv2) inscrite sur le support, la deuxième clé privée utilisateur (priv2) étant associée à une deuxième clé publique utilisateur (pub2) pour former une deuxième paire de clés cryptographiques asymétriques,
- un deuxième élément occultant témoin (hol2) pour occulter la deuxième clé privée utilisateur (priv2) et la sceller, ladite deuxième clé privée utilisateur (priv2) n'étant accessible que par rupture visible dudit deuxième élément occultant témoin (hol2) et
- au moins une dernière clé publique utilisateur (pub0) et/ou au moins une adresse cryptographique (adr, adr-mult) inscrite sur le support, celle-ci étant générée à partir de la première clé publique utilisateur (pub1) et de la deuxième clé publique utilisateur (pub2).

16. Support physique selon la revendication 15, ledit support (100,200) étant **caractérisé en ce qu'**il comprend en outre
- une troisième clé privée utilisateur (priv3) inscrite sur le support, la troisième clé privée utilisateur (priv3) étant associée à une troisième clé publique utilisateur (pub3) pour former une troisième paire de clés cryptographiques asymétriques ,
- un troisième élément occultant témoin (hol3) pour occulter la troisième clé privée utilisateur (priv3) et la sceller, ladite troisième clé privée utilisateur (priv3) n'étant accessible que par rupture visible dudit troisième élément occultant témoin (hol3); et
- la dernière clé publique utilisateur (pub0) et/ou l' adresse cryptographique (adr, adr-mult) inscrite sur le support étant générée à partir de la première clé publique utilisateur (pub1), de la deuxième clé publique utilisateur (pub2) et de la troisième clé publique utilisateur (pub3).

17. Support physique selon l'une des revendications 15 ou 16, ledit support (100,200) étant en métal, en bois, en verre, en pierre, en plastique, en céramique, en cuir, en tissu, ou en papier.

18. Support physique selon l'une des revendications 15 à 17, ledit support (100,200) étant formé d'une barre en métal ou en alliage de métaux, telle qu'une barre en or, platine, argent ou acier.

19. Support physique selon l'une des revendications 15 à 18, ledit support (100,200) étant formé en outre d'une ou plusieurs parties mobiles en métal, les différentes clés publiques, clés privées ou adresses étant inscrites sur lesdites parties mobiles en métal.

20. Support physique selon l'une des revendications 15 à 19, ledit support (200) étant formé de plusieurs éléments séparés (210,220,230,240) et d'une base (250), chaque élément séparé (bar1-bar4) possédant ses propres clés privées (priv1, priv2) et sa propre clé publique (pub1), une adresse multi-signature de monnaie cryptographique commune aux éléments séparés (210,220,230,240) étant générée et inscrite sur la base (250).

21. Support physique selon l'une des revendications 15 à 20, ledit support (100,200) comprenant
une pluralité de n clés cryptographiques asymétriques, avec n>2, lesdites clés cryptographiques comprenant chacune une combinaison de clé publique utilisateur avec une clé privée utilisateur et/ou avec une adresse de clé publique et/ou avec une adresse multi-signature de plusieurs clés publiques,
- les *n* clés privées utilisateur étant inscrites sur le support,
- une pluralité de n éléments occultants témoin pour occulter chacune des clés privées utilisateur respectives inscrites sur le support et les sceller, lesdites *n* clés privées utilisateur n'étant accessibles que par rupture visible desdits *n* éléments occultants témoin respectifs, et
- une *n+1* ème clé publique utilisateur et/ou une *n+1* ème adresse cryptographique (adr, adr-mult) inscrite sur le support, celle-ci étant générée à partir des *n* clés publiques utilisateur.

22. Support physique selon l'une des revendications 15 à 21, ledit support (100,200) comportant en outre une ou plusieurs des informations suivantes:
- le nom d'une entité de gestion (31,22,33),
- un numéro de série,
- une année de production,
- un nom et une quantité de monnaie cryptographique.

## Patentansprüche

1. Verfahren zur Registrierung und zur sicheren Speicherung kryptographischer Schlüssel auf einem physikalischen Medium (100,200), wobei das Verfahren die folgenden Schritte umfasst:
a) ausgehend von einer ersten Verwaltungseinheit (31), Generieren (1) eines ersten Paares asymmetrischer kryptographischer Schlüssel, das einen ersten öffentlichen Benutzerschlüssel (pub1) und einen ersten privaten Benutzerschlüssel (priv1) umfasst, das umfasst:
- Speichern (1) des ersten öffentlichen Benutzerschlüssels (pub1) in einem ersten Aufzeichnungsspeicher (41);
- Registrieren (2) des ersten privaten Benutzerschlüssels (priv1) auf einem physikalischen Medium (100,200), und
- Verifizieren (3) des registrierten ersten privaten Benutzerschlüssels (priv1) und Aufbringen (4) eines ersten okkultierenden Kontrollelements (hol1) auf dem physikalischen Medium, um den ersten privaten Benutzerschlüssel (priv1) zu okkultieren und ihn zu versiegeln, wobei der erste private Benutzerschlüssel (priv1) nur durch sichtbaren Bruch des ersten okkultierenden Kontrollelements (hol1) zugänglich ist;
b) Generieren (6) eines zweiten Paares asymmetrischer kryptographischer Schlüssel, das einen zweiten öffentlichen Benutzerschlüssel (pub2) und einen zweiten privaten Benutzerschlüssel (priv2) umfasst, das umfasst:
- Speichern des zweiten öffentlichen Benutzerschlüssels (pub2) in einem zweiten Aufzeichnungsspeicher (42);
- Registrieren (7) des zweiten privaten Benutzerschlüssels (priv2) auf dem physikalischen Medium, und
- Verifizieren (8) des registrierten zweiten privaten Benutzerschlüssels (priv2) und Aufbringen (9) eines zweiten okkultierenden Kontrollelements (hol2) auf dem physikalischen Medium, um den zweiten privaten Benutzerschlüssel (priv2) zu okkultieren und ihn zu versiegeln, wobei der zweite private Benutzerschlüssel (priv2) nur durch sichtbares Brechen des zweiten okkultierenden Kontrollelements (hol2) zugänglich ist;
c) Senden (5) des physikalischen Mediums an eine zweite Verwaltungseinheit (32), wobei das Generieren (6) des zweiten Paares asymmetrischer kryptographischer Schlüssel ausgehend von der zweiten Verwaltungseinheit (32) ausgeführt wird, wobei das Verfahren außerdem die folgenden Schritte umfasst:
d) Generieren (10) mindestens eines letzten öffentlichen Benutzerschlüssels (pub0) und/oder mindestens einer kryptographischen Adresse (adr, adr-mult) ausgehend von dem ersten öffentlichen Benutzerschlüssel (pub1) und dem zweiten öffentlichen Benutzerschlüssel (pub2),
e) Registrieren (11) des mindestens einen letzten öffentlichen Benutzerschlüssels (pub0) und/oder der mindestens einen kryptographischen Adresse (adr, adr-mult) auf dem physikalischen Medium und das Verifizieren (12,13) dieser, und
f) abschließendes Rückgewinnen der privaten Schlüssel (priv1, priv2), das das Generieren eines letzten privaten Benutzerschlüssels (priv0) umfasst, der dem letzten öffentlichen Benutzerschlüssel (pub0) entspricht, der auf dem physikalischen Medium registriert ist und/oder der mindestens einen kryptographischen Adresse (adr, adr-mult), die auf dem physikalischen Medium registriert ist, wobei der erste private Benutzerschlüssel (priv1) von einem ersten Gravurgerät (51) auf das physikalische Medium (100,200) graviert wird (3), und der zweite private Benutzerschlüssel (priv2) von einem zweiten Gravurgerät (52), das von dem ersten Gravurgerät (51) unterschiedlich ist, auf das physikalische Medium (100,200) graviert (7) wird.

2. Verfahren zur Registrierung und sicheren Speicherung kryptographischer Schlüssel auf einem physikalischen Medium nach Anspruch 1, wobei der mindestens eine letzte öffentliche Benutzerschlüssel (pub0) auf das physikalische Medium (100,200) graviert (11) wird, und/oder die mindestens eine kryptographische Adresse (adr, adr-mult) auf das physikalische Medium (100,200) graviert (11) wird.

3. Verfahren zur Registrierung und sicheren Speicherung kryptographischer Schlüssel auf einem physikalischen Medium nach einem der Ansprüche 1 oder 2, wobei der letzte öffentliche Benutzerschlüssel (pub0) Teil eines dritten asymmetrischen kryptographischen Paares ist, das den letzten öffentlichen Benutzerschlüssel (pub0) und den letzten privaten Benutzerschlüssel (priv0) umfasst.

4. Verfahren zur Registrierung und sicheren Speicherung kryptographischer Schlüssel auf einem physikalischen Medium nach einem der Ansprüche 1 bis 3, wobei der Schritt des Rückgewinnens der privaten Schlüssel umfasst:
- Verifizieren (14) der Unversehrtheit des ersten und des zweiten okkultierenden Kontrollelements (hol1, hol2),
- Lesen (15) des ersten und des zweiten privaten Benutzerschlüssels (priv1, priv2) durch Abziehen des ersten und des zweiten okkultierenden Kontrollelements (hol1, hol2), und
- dann, Generieren (16) ausgehend von dem ersten und dem zweiten privaten Benutzerschlüssel (priv1, priv2), die auf dem Medium registriert sind, des letzten privaten Benutzerschlüssels (priv0), der dem letzten öffentlichen Benutzerschlüssel (pub0) entspricht.

5. Verfahren zur Registrierung und sicheren Speicherung kryptographischer Schlüssel auf einem physikalischen Medium nach einem der Ansprüche 1 bis 4, wobei es der letzte öffentliche Benutzerschlüssel (pub0) erlaubt, die mindestens eine kryptographische Adresse (adr) zu generieren, wobei diese Adresse (adr) ausgehend von dem letzten öffentlichen Benutzerschlüssel (pub0) berechnet wird und auf dem physikalischen Medium registriert wird.

6. Verfahren zur Registrierung und sicheren Speicherung kryptographischer Schlüssel auf einem physikalischen Medium nach einem der Ansprüche 1 bis 4, wobei die mindestens eine kryptographische Adresse (adr-mult) eine Multisignaturadresse (adr-mult) ist, die ausgehend von dem ersten öffentlichen Benutzerschlüssel (pub1) und dem zweiten öffentlichen Benutzerschlüssel (pub2) generiert (10) wird, wobei diese Multisignaturadresse (adr-mult) auf das physikalische Medium graviert (11) wird.

7. Verfahren zur Registrierung und zur sicheren Speicherung kryptographischer Schlüssel auf einem physikalischen Medium nach einem der Ansprüche 5 oder 6, wobei das Verfahren einen Schritt des Rückgewinnens der privaten Schlüssel umfasst, das umfasst:
- Verifizieren der Unversehrtheit des ersten und des zweiten okkultierenden Kontrollelements (hol1, hol2),
- Lesen des ersten und des zweiten privaten Benutzerschlüssels (priv1, priv2) durch Abziehen des ersten und des zweiten okkultierenden Kontrollelements (hol1, hol2), und
- ausgehend von dem ersten und dem zweiten privaten Benutzerschlüssel (priv1, priv2), die auf dem Medium registriert sind, Neuberechnen der mindestens einen kryptographische Adresse (adr) und dann Verifizieren ihrer Übereinstimmung mit der auf dem physikalischen Medium registrierten kryptographischen Adresse (adr), um das Zugreifen auf eine und/oder das Abziehen einer Kryptowährung von einem Konto zu erlauben.

8. Verfahren zur Registrierung und zur sicheren Speicherung kryptographischer Schlüssel auf einem physikalischen Medium nach einem der Ansprüche 1 bis 7, wobei das Verfahren umfasst:
f) das Senden des physikalischen Mediums (100,200) an eine dritte Verwaltungseinheit (33),
g) ausgehend von der dritten Verwaltungseinheit (33), das Generieren (6) eines dritten Paares asymmetrischer kryptographischer Schlüssel, das einen dritten öffentlichen Benutzerschlüssel (pub3) und einen dritten privaten Benutzerschlüssel (priv3) umfasst, das umfasst:
- Speichern des dritten öffentlichen Benutzerschlüssels (pub3) in einem zweiten Aufzeichnungsspeicher (43);
- Registrieren (7) des dritten privaten Benutzerschlüssels (priv3) auf dem physikalischen Medium, und
- Verifizieren (8) des registrierten dritten privaten Benutzerschlüssels (priv3) und Aufbringen (9) eines dritten okkultierenden Kontrollelements (hol3) auf dem physikalischen Medium, um den dritten privaten Benutzerschlüssel (priv3) zu okkultieren und ihn zu versiegeln, wobei der dritte private Benutzerschlüssel (priv3) nur durch sichtbares Brechen des dritten okkultierenden Kontrollelements (hol3) zugänglich ist;
h) das Generieren (10) des letzten öffentlichen Benutzerschlüssels (pub0) und/oder mindestens einer kryptographischen Adresse (adr, adr-mult) ausgehend von dem ersten öffentlichen Benutzerschlüssel (pub1), dem zweiten öffentlichen Benutzerschlüssel (pub2) und dem dritten öffentlichen Benutzerschlüssel (pub3), und
i) das Registrieren (11) des letzten öffentlichen Benutzerschlüssels (pub0) und/oder der mindestens einen kryptographischen Adresse (adr, adr-mult) auf dem physikalischen Medium und das Verifizieren (12,13) dieser.

9. Verfahren zur Registrierung und zur sicheren Speicherung kryptographischer Schlüssel auf einem physikalischen nach Anspruch 8, wobei der Schritt des Rückgewinnens der privaten Schlüssel umfasst:
- Verifizieren (16) der Unversehrtheit des ersten, zweiten und dritten okkultierenden Kontrollelements (hol1, hol2, hol3),
- Lesen des ersten, zweiten und dritten privaten Benutzerschlüssels (priv1, priv2, priv3) durch Abziehen des ersten, zweiten und dritten okkultierenden Kontrollelements, und
- dann, ausgehend von dem ersten, zweiten und dritten privaten Benutzerschlüssel (priv1, priv2, priv3), die auf dem Medium registriert sind, Generieren des letzten privaten Benutzerschlüssels (priv0), der dem letzten öffentlichen Benutzerschlüssel (pub0) und/oder der mindestens einen kryptographische Adresse (adr, adr-mult) entspricht.

10. Verfahren zur Registrierung und zur sicheren Speicherung kryptographischer Schlüssel auf einem physikalischen nach einem der Ansprüche 8 oder 9, wobei es der letzte öffentliche Benutzerschlüssel (pub0) erlaubt, die mindestens eine kryptographische Adresse (adr) zu generieren, wobei diese Adresse (adr) ausgehend von dem letzten öffentlichen Benutzerschlüssel (pub0) berechnet und auf den physikalischen Medium graviert wird.

11. Verfahren zur Registrierung und zur sicheren Speicherung kryptographischer Schlüssel auf einem physikalischen Medium nach einem der Ansprüche 1 bis 10, wobei jedes der okkultierenden Elemente (hol1, hol2, hol3) ein holographischer Kontrollaufkleber (hol1, hol2, hol3) ist.

12. Verfahren zur Registrierung und zur sicheren Speicherung kryptographischer Schlüssel auf einem physikalischen Medium nach einem der Ansprüche 1 bis 11, wobei das Verfahren das Generieren einer Vielzahl *n* asymmetrischer kryptographischer Schlüssel aus *n* verschiedenen Verwaltungseinheiten mit *n*>2 umfasst, wobei die Schlüssel jeweils eine Kombination aus einem öffentlichen Benutzerschlüssel mit einem privaten Benutzerschlüssel und/oder einer öffentlichen Schlüsseladresse und/oder einer Multisignaturadresse mehrerer öffentlicher Schlüssel umfassen, wobei die *n*-1 ersten Verwaltungseinheiten nacheinander die Schritte (1) bis (5) ausführen und die *n*-te Verwaltungseinheit die Ausführung der Schritte (6) bis (13) vervollständigt.

13. System zur Registrierung und zur sicheren Speicherung kryptographischer Schlüssel auf einem physikalischen Medium für die Ausführung des Verfahrens nach einem der Ansprüche 1 bis 12, wobei das System umfasst:
eine erste Verwaltungseinheit (31), die dazu konfiguriert ist, ein erstes Paar asymmetrischer kryptographischer Schlüssel zu generieren, das einen ersten öffentlichen Benutzerschlüssel (pub1) und einen ersten privaten Benutzerschlüssel (priv1) umfasst,
wobei die erste Verwaltungseinheit (31) umfasst:
- einen ersten Rechner (41), in dem Programmanweisungen gespeichert sind, die, wenn sie von einem ersten Datenprozessor gelesen werden, bewirken, dass der erste Rechner den ersten privaten Benutzerschlüssel (priv1) generiert und den ersten öffentlichen Benutzerschlüssel (pub1) in einem ersten Aufzeichnungsspeicher speichert,
- eine erste Vorrichtung (51), die mit dem ersten Rechner assoziiert ist, die dazu konfiguriert ist, den ersten privaten Benutzerschlüssel (priv1) auf einem physikalischen Medium (100,200) zu registrieren, und
- ein erstes Mittel zum Verifizieren des registrierten ersten privaten Benutzerschlüssels (priv1) und zum Aufbringen eines ersten okkultierenden Kontrollelements (hol1) auf dem physikalischen Medium, um den ersten privaten Benutzerschlüssel (priv1) zu okkultieren und ihn nicht sichtbar zu machen,
wobei das System weiter umfasst:
eine zweite Verwaltungseinheit (32), die das zu konfiguriert ist, ein zweites Paar asymmetrischer kryptographischer Schlüssel zu generieren, das einen zweiten öffentlichen Benutzerschlüssel (pub2) und einen zweiten privaten Benutzerschlüssel (priv2) umfasst, wobei die zweite Verwaltungseinheit (32) umfasst:
- einen zweiten Rechner (42), in dem Programmanweisungen gespeichert sind, die, wenn sie von einem zweiten Datenprozessor gelesen werden, bewirken, dass der zweite Rechner (42) dazu konfiguriert ist, den zweiten öffentlichen Benutzerschlüssel (pub2) in einem zweiten Aufzeichnungsspeicher zu speichern;
- eine zweite Vorrichtung (52), die mit dem zweiten Rechner assoziiert ist, um den zweiten privaten Benutzerschlüssel (priv2) auf dem physikalischen Medium zu registrieren, und
- ein zweites Mittel zum Verifizieren des registrierten zweiten privaten Benutzerschlüssels (priv2) und zum Aufbringen eines zweiten okkultierenden Kontrollelements (hol2) auf dem physikalischen Medium, um den zweiten privaten Benutzerschlüssel (priv2) zu okkultieren und ihn nicht sichtbar zu machen,
- wobei der zweite Rechner (42) weiter ausgelegt ist, um einen letzten öffentlichen Benutzerschlüssel (pub0) ausgehend von dem ersten öffentlichen Benutzerschlüssel (pub1) und dem zweiten öffentlichen Benutzerschlüssel (pub2) zu generieren und um die Registrierung des letzten öffentlichen Benutzerschlüssels (pub0) auf dem physikalischen Medium durch die zweite Vorrichtung (52) und dessen Verifizierung zu erlauben,
- wobei die erste Vorrichtung (51) ein erstes Gravurgerät (51) umfasst, das dazu konfiguriert ist, den ersten privaten Benutzerschlüssel (priv1) auf das physikalische Medium (100,200) zu gravieren, und die zweite Vorrichtung (52) ein zweites Gravurgerät (52) umfasst, das von dem ersten Gravurgerät (51) unterschiedlich ist, das dazu konfiguriert ist, den zweiten privaten Benutzerschlüssel (priv2) auf das physikalische Medium (100,200) zu gravieren.

14. System zur Registrierung und sicheren Speicherung kryptographischer Schlüssel auf einem physikalischen Medium nach Anspruch 13, wobei das System weiter umfasst:
eine dritte Verwaltungseinheit (33), die dazu konfiguriert ist, ein drittes Paar asymmetrischer kryptographischer Schlüssel zu generieren, das einen dritten öffentlichen Benutzerschlüssel (pub3) und einen dritten privaten Benutzerschlüssel (priv3) umfasst,
wobei die dritte Verwaltungseinheit (33) umfasst:
- einen dritten Rechner (43), in dem Programmanweisungen gespeichert sind, die, wenn sie von einem dritten Datenprozessor gelesen werden, bewirken, dass der dritte Rechner den dritten öffentlichen Benutzerschlüssel (pub3) in einem dritten Aufzeichnungsspeicher speichert und den dritten ersten privaten Benutzerschlüssel (priv3) generiert,
- eine dritte Vorrichtung (53), die mit dem dritten Rechner (43) assoziiert ist, die dazu konfiguriert ist, den dritten privaten Benutzerschlüssel (priv3) auf dem physikalischen Medium (100,200) zu registrieren, und
- ein drittes Mittel zum Verifizieren des registrierten dritten privaten Benutzerschlüssels (priv3) und zum Aufbringen eines dritten okkultierenden Kontrollelements (hol3) auf dem physikalischen Medium, um den dritten privaten Benutzerschlüssel (priv3) zu okkultieren und ihn nicht sichtbar zu machen,
- wobei der dritte Rechner (43) weiter dazu konfiguriert ist, den letzten öffentlichen Benutzerschlüssel (pub0) ausgehend von dem ersten öffentlichen Benutzerschlüssel (pub1), dem zweiten öffentlichen Benutzerschlüssel (pub2) und dem dritten öffentlichen Benutzerschlüssel (pub3) zu generieren und um die Registrierung des letzten öffentlichen Benutzerschlüssels (pub0) auf dem physikalischen Medium durch die dritte Vorrichtung (53) zu erlauben.

15. Physikalisches Medium (100,200), das gemäß dem Verfahren zur Registrierung und sicheren Speicherung kryptographischer Schlüssel nach einem der Ansprüche 1 bis 12 hergestellt ist, wobei das Medium (100,200) umfasst:
- einen ersten privaten Benutzerschlüssel (priv1), der auf dem Medium registriert ist, wobei der erste private Benutzerschlüssel (priv1) mit einem ersten öffentlichen Benutzerschlüssel (pub1) assoziiert ist, um ein erstes Paar asymmetrischer kryptographischer Schlüssel zu bilden,
- ein erstes okkultierendes Kontrollelement (hol1), um den ersten privaten Benutzerschlüssel (priv1) zu okkultieren und ihn zu versiegeln, wobei der erste private Benutzerschlüssel (priv1) nur durch sichtbaren Bruch des ersten okkultierenden Kontrollelements (hol1) zugänglich ist;
- einen zweiten privaten Benutzerschlüssel (priv2), der auf dem Medium registriert ist, wobei der zweite private Benutzerschlüssel (priv2) mit einem zweiten öffentlichen Benutzerschlüssel (pub2) assoziiert ist, um ein zweites Paar asymmetrischer kryptographischer Schlüssel zu bilden,
- ein zweites okkultierendes Kontrollelement (hol2), um den zweiten privaten Benutzerschlüssel (priv2) zu okkultieren und ihn zu versiegeln, wobei der zweite private Benutzerschlüssel (priv2) nur durch sichtbares Brechen des zweiten okkultierenden Kontrollelements (hol2) zugänglich ist; und
- mindestens einen letzten öffentlichen Benutzerschlüssel (pub0) und/oder mindestens eine kryptographische Adresse (adr, adr-mult), die auf dem Medium registriert ist, wobei diese ausgehend von dem ersten öffentlichen Benutzerschlüssel (pub1) und dem zweiten öffentlichen Benutzerschlüssel (pub2) generiert ist.

16. Physikalisches Medium nach Anspruch 15, wobei das Medium (100,200) **dadurch gekennzeichnet ist, dass** er weiter umfasst
- einen dritten privaten Benutzerschlüssel (priv3), der auf dem Medium registriert ist, wobei der dritte private Benutzerschlüssel (priv3) mit einem dritten öffentlichen Benutzerschlüssel (pub3) assoziiert ist, um ein drittes Paar asymmetrischer kryptographischer Schlüssel zu bilden,
- ein drittes okkultierendes Kontrollelement (hol3), um den dritten privaten Benutzerschlüssel (priv3) zu okkultieren und ihn zu versiegeln, wobei der dritte private Benutzerschlüssel (priv3) nur durch sichtbaren Bruch des dritten okkultierenden Kontrollelements (hol3) zugänglich ist; und
- den letzten öffentlichen Benutzerschlüssel (pub0) und/oder die kryptographische Adresse (adr, adr-mult), die auf dem Medium registriert ist, die ausgehend von dem ersten öffentlichen Benutzerschlüssel (pub1), dem zweiten öffentlichen Benutzerschlüssel (pub2) und dem dritten öffentlichen Benutzerschlüssel (pub3) generiert ist.

17. Physikalischer Medium nach einem der Ansprüche 15 oder 16, wobei das Medium (100,200) aus Metall, Holz, Glas, Stein, Kunststoff, Keramik, Leder, Stoff oder Papier besteht.

18. Physikalisches Medium nach einem der Ansprüche 15 bis 17, wobei das Medium (100,200) aus einem Stab aus Metall oder aus Legierung von Metallen gebildet ist, wie beispielsweise einem Stab aus Gold, Platin, Silber oder Stahl.

19. Physikalisches Medium nach einem der Ansprüche 15 bis 18, wobei das Medium (100,200) weiter aus einem oder mehreren beweglichen Teilen aus Metall gebildet ist, wobei die unterschiedlichen öffentlichen Schlüssel, privaten Schlüssel oder Adressen auf den beweglichen Metallteilen registriert sind.

20. Physikalisches Medium nach einem der Ansprüche 15 bis 19, wobei das Medium (200) aus mehreren separaten Elementen (210,220,230,240) und einer Basis (250) gebildet ist, wobei jedes separate Element (bar1-bar4) seine eigenen privaten Schlüssel (priv1, priv2) und seinen eigenen öffentlichen Schlüssel (pub1) besitzt, wobei eine Multisignaturadresse einer kryptographischen Währung, die den separaten Elementen (210,220,230,240) gemeinsam ist, generiert und auf der Basis (250) registriert ist.

21. Physikalisches Medium nach einem der Ansprüche 15 bis 20, wobei das Medium (100,200) eine Vielzahl n asymmetrischer kryptographischer Schlüssel mit n>2 umfasst, wobei die kryptographischen Schlüssel jeweils eine Kombination aus einem öffentlichen Benutzerschlüssel mit einem privaten Benutzerschlüssel und/oder mit einer Adresse eines öffentlichen Schlüssels und/oder mit einer Multisignaturadresse mehrerer öffentlicher Schlüssel umfassen,
- wobei die n privaten Benutzerschlüssel auf dem Medium registriert sind,
- eine Vielzahl n okkultierender Kontrollelemente, um jeden der jeweiligen privaten Benutzerschlüssel, die auf dem Medium registriert sind, zu okkultieren und zu versiegeln, wobei die n privaten Benutzerschlüssel nur durch sichtbaren Bruch der n jeweiligen okkultierenden Kontrollelemente zugänglich sind, und
- einen n+1-ten öffentlichen Benutzerschlüssel und/oder eine n+1-te kryptographische Adresse (adr, adr-mult), die auf dem Medium registriert ist, wobei diese aus den n öffentlichen Benutzerschlüsseln generiert ist.

22. Physikalisches Medium nach einem der Ansprüche 15 bis 21, wobei das Medium (100,200) weiter eine oder mehrere der folgenden Informationen umfasst:
- den Namen einer Verwaltungseinheit (31,22,33),
- eine Seriennummer,
- ein Herstellungsjahr,
- einen Namen und eine Menge an Kryptowährung.

## Claims

1. A method for inscribing and securely storing cryptographic keys on a physical medium (100, 200), said method comprising the following steps:
a) from a first management entity (31), generating (1) a first pair of asymmetric cryptographic keys comprising a first user public key (pub1) and a first user private key (priv1), comprising:
- storing (1) the first user public key (pub1) in a first recording memory (41);
- inscribing (2) the first user private key (priv1) onto a physical medium (100, 200), and
- verifying (3) the first user private key (priv1) inscribed and affixing (4) a first tamper-evident concealing element (hol1) to the physical medium in order to conceal the first user private key (priv1) and seal same, said first user private key (priv1) being accessible only by visibly breaking said first tamper-evident concealing element (hol1);
b) generating (6) a second pair of asymmetric cryptographic keys comprising a second user public key (pub2) and a second user private key (priv2), comprising:
- storing the second user public key (pub2) in a second recording memory (42);
- inscribing (7) the second user private key (priv2) onto the physical medium, and
- verifying (8) the second user private key (priv2) inscribed and affixing (9) a second tamper-evident concealing element (hol2) to the physical medium in order to conceal the second user private key (priv2) and seal same, said second user private key (priv2) being accessible only by visibly breaking said second tamper-evident concealing element (hol2);
c) sending (5) the physical medium to a second management entity (32), the generation (6) of the second pair of asymmetric cryptographic keys being carried out from said second management entity (32), said method further comprising the following steps:
d) generating (10) at least one last user public key (pub0) and/or at least one cryptographic address (adr, adr-mult) from the first user public key (pub1) and the second user public key (pub2),
e) inscribing (11) said at least one last public user key (pub0) and/or said at least one cryptographic address (adr, adr-mult) onto the physical medium, and verifying (12, 13) same, and
f) finally recovering the private keys (priv1, priv2) comprising the generation of a last user private key (priv0) corresponding to the last user public key (pub0) inscribed onto the physical medium and/or to said at least one cryptographic address (adr, adr-mult) inscribed onto the physical medium, wherein the first user private key (priv1) is engraved (3) on the physical medium (100, 200) by a first engraving apparatus (51) and the second user private key (priv2) is engraved (7) on the physical medium (100, 200) by a second engraving apparatus (52) distinct from the first engraving apparatus (51).

2. The method for inscribing and securely storing cryptographic keys on a physical medium according to claim 1, wherein said at least one last user public key (pub0) is engraved (11) on the physical medium (100, 200) and/or said at least one cryptographic address (adr, adr-mult) is engraved (11) on the physical medium (100, 200).

3. The method for inscribing and securely storing cryptographic keys on a physical medium according to claim 1, wherein the last user public key (pub0) is part of a third asymmetric cryptographic pair comprising the last user public key (pub0) and the last user private key (priv0).

4. The method for inscribing and securely storing cryptographic keys on a physical medium according to any one of claims 1 to 3, wherein the step of recovering private keys comprises:
- verifying (14) the integrity of the first and second tamper-evident concealing elements (hol1, hol2),
- reading (15) the first and second user private keys (priv1, priv2) by removing the first and second tamper-evident concealing elements (hol1, hol2), and
- then, from the first and second user private keys (priv1, priv2) inscribed onto the medium, generating (16) the last user private key (priv0) corresponding to the last user public key (pub0).

5. The method for inscribing and securely storing cryptographic keys on a physical medium according to any one of claims 1 to 4, wherein the last user public key (pub0) makes it possible to generate said at least one cryptographic address (adr), this address (adr) being calculated from the last user public key (pub0) and being inscribed onto the physical medium.

6. The method for inscribing and securely storing cryptographic keys on a physical medium according to any one of claims 1 to 4, wherein said at least one cryptographic address (adr-mult) is a multi-signature address (adr-mult) generated (10) from the first user public key (pub1) and the second user public key (pub2), this multi-signature address (adr-mult) being engraved (11) on the physical medium.

7. The method for inscribing and securely storing cryptographic keys on a physical medium according to one of claims 5 or 6, wherein said method comprises a step of recovering private keys which comprises:
- verifying the integrity of the first and second tamper-evident concealing elements (hol1, hol2),
- reading the first and second user private keys (priv1, priv2) by removing the first and second tamper-evident concealing elements (hol1, hol2), and
- from the first and second user private keys (priv1, priv2) inscribed onto the medium, recalculating said at least one cryptographic address (adr) and then verifying whether it matches the cryptographic address (adr) inscribed onto the physical medium to make it possible to access and/or withdraw cryptocurrency from an account.

8. The method for inscribing and securely storing cryptographic keys on a physical medium according to any one of claims 1 to 7, wherein said method comprises:
f) sending the physical medium (100, 200) to a third management entity (33),
g) from the third management entity (33), generating (6) a third pair of asymmetric cryptographic keys comprising a third user public key (pub3) and a third user private key (priv3), comprising:
- storing the third user public key (pub3) in a third recording memory (43);
- inscribing (7) the third user private key (priv3) onto a physical medium, and
- verifying (8) the third user private key (priv3) inscribed and affixing (9) a third tamper-evident concealing element (hol3) to the physical medium in order to conceal the third user private key (priv3) and seal same, said third user private key (priv3) being accessible only by visibly breaking said third tamper-evident concealing element (hol3);
h) generating (10) at least one last user public key (pub0) and/or at least one cryptographic address (adr, adr-mult) from the first user public key (pub1), the second user public key (pub2), and the third user public key (pub3), and
i) inscribing (11) said last public user key (pub0) and/or said at least one cryptographic address (adr, adr-mult) onto the physical medium, and verifying (12, 13) same.

9. The method for inscribing and securely storing cryptographic keys on a physical medium according to claim 9, wherein the step of recovering private keys comprises:
- verifying (16) the integrity of the first, second and third tamper-evident concealing elements (hol1, hol2, hol3),
- reading the first, second and third user private keys (priv1, priv2, priv3) by removing the first, second and third concealing elements, and
- then, from the first, second and third user private keys (priv1, priv2, priv3) inscribed onto the medium, generating the last user private key (priv0) corresponding to the last user public key (pub0) and/or to said at least one cryptographic address (adr, adr-mult).

10. The method for inscribing and securely storing cryptographic keys on a physical medium according to one of claims 8 or 9, wherein the last user public key (pub0) makes it possible to generate said at least one cryptographic address (adr), this address (adr) being calculated from the last user public key (pub0) and being engraved on the physical medium.

11. The method for inscribing and securely storing cryptographic keys on a physical medium according to any one of claims 1 to 10, wherein each of said concealing elements (hol1, hol2, hol3) is a tamper-evident holographic sticker (hol1, hol2, hol3).

12. The method for inscribing and securely storing cryptographic keys on a physical medium according to any one of claims 1 to 11, wherein the method comprises generating a plurality of *n* asymmetric cryptographic keys, from *n* distinct management entities, wherein *n*>2, said keys each comprising a combination of a user public key with a user private key, and/or a public key address, and/or a multi-signature address of multiple public keys, the *n-1* first management entities performing steps (1) to (5) one after the other and the *n*^{th} management entity performing steps (6) to (13).

13. A system for inscribing and securely storing cryptographic keys on a physical medium in order to implement the method according to one of claims 1 to 12, the system comprising:
a first management entity (31) configured to generate a first pair of asymmetric cryptographic keys comprising a first user public key (pub1) and a first user private key (priv1),
the first management entity (31) comprising:
- a first computer (41) in which program instructions are stored, which instructions, when read by a first data processor, cause the first computer to generate the first user private key (priv1) and store the first user public key (pub1) in a first recording memory,
- a first device (51) associated with the first computer configured to inscribe the first user private key (priv1) onto a physical medium (100, 200), and
- a first means for verifying the first user private key (priv1) inscribed and affixing a first tamper-evident concealing element (hol1) to the physical medium in order to conceal the first user private key (priv1) and make it non-visible,
the system further comprising:
a second management entity (32) configured to generate a second pair of asymmetric cryptographic keys comprising a second user public key (pub2) and a second user private key (priv2), the second management entity (32) comprising:
- a second computer (42) in which program instructions are stored, which instructions, when read by a second data processor, cause the second computer (42) to be configured to store the second user public key (pub2) in a second recording memory;
- a second device (52) associated with the second computer for inscribing the second user private key (priv2) onto the physical medium, and
- a second means for verifying the second user private key (priv2) inscribed and affixing a second tamper-evident concealing element (hol2) to the physical medium in order to conceal the second user private key (priv2) and make it non-visible,
- the second computer (42) being further configured to generate a last user public key (pub0) from the first user public key (pub1) and the second user public key (pub2), and to allow the inscription of the last user public key (pub0) onto the physical medium by the second device (52) and the verification of same,
- said first device (51) comprising a first engraving apparatus (51) configured to engrave the first user private key (priv1) on the physical medium (100, 200), and said second device (52) comprising a second engraving apparatus (52) distinct from the first engraving apparatus (51) configured to engrave the second user private key (priv2) on the physical medium (100, 200).

14. The system for inscribing and securely storing cryptographic keys on a physical medium according to claim 13, the system further comprising:
a third management entity (33) configured to generate a third pair of asymmetric cryptographic keys comprising a third user public key (pub3) and a third user private key (priv3),
the third management entity (33) comprising:
- a third computer (43) in which program instructions are stored, which instructions, when read by a third data processor, cause the third computer to store the third user public key (pub3) in a third recording memory and to generate the third first user private key (priv3),
- a third device (53) associated with the third computer (43) configured to inscribe the third user private key (priv3) onto the physical medium (100, 200), and
- a third means for verifying the third user private key (priv3) inscribed and affixing a third tamper-evident concealing element (hol3) to the physical medium in order to conceal the third user private key (priv3) and make it non-visible,
- the third computer (43) being further configured to generate the last user public key (pub0) from the first user public key (pub1), the second user public key (pub2) and the third user public key (pub3), and to allow the inscription of the last user public key (pub0) onto the physical medium by the third device (53).

15. A physical medium (100, 200) produced according to the method for inscribing and securely storing cryptographic keys on a physical medium according to one of claims 1 to 12, said medium (100, 200) comprising:
- a first user private key (priv1) inscribed onto the medium, the first user private key (priv1) being associated with a first user public key (pub1) to form a first pair of asymmetric cryptographic keys,
- a first tamper-evident concealing element (hol1) for concealing first user private key (priv1) and sealing same, said first user private key (priv1) being accessible only by visibly breaking said first tamper-evident concealing element (hol1);
- a second user private key (priv2) inscribed onto the medium, the second user private key (priv2) being associated with a second user public key (pub2) to form a second pair of asymmetric cryptographic keys,
- a second tamper-evident concealing element (hol2) for concealing second user private key (priv2) and sealing same, said second user private key (priv2) being accessible only by visibly breaking said second tamper-evident concealing element (hol2); and
- at least one last user public key (pub0) and/or at least one cryptographic address (adr, adr-mult) inscribed onto the medium, which is generated from the first user public key (pub1) and the second user public key (pub2).

16. The physical medium according to claim 15, said medium (100, 200) being **characterized in that** it further comprises
- a third user private key (priv3) inscribed onto the medium, the third user private key (priv3) being associated with a third user public key (pub3) to form a third pair of asymmetric cryptographic keys,
- a third tamper-evident concealing element (hol3) for concealing third user private key (priv3) and sealing same, said third user private key (priv3) being accessible only by visibly breaking said third tamper-evident concealing element (hol3); and
- the last user public key (pub0) and/or the cryptographic address (adr, adr-mult) inscribed onto the medium being generated from the first user public key (pub1), the second user public key (pub2) and the third user public key (pub3).

17. The physical medium according to one of claims 15 or 16, said medium (100, 200) being made of metal, wood, glass, stone, plastic, ceramic, leather, fabric or paper.

18. The physical medium according to one of claims 15 to 16, said medium (100, 200) being formed of a bar of metal or metal alloy, such as a gold, platinum, silver or steel bar.

19. The physical medium according to one of claims 15 to 18, said medium (100, 200) being further formed of one or more moving metal parts, the various public keys, private keys or addresses being inscribed onto said moving metal parts.

20. The physical medium according to one of claims 15 to 19, said medium (200) being formed of a plurality of separate elements (210, 220, 230, 240) and a base (250), each separate element (bar1-bar4) has its own private keys (priv1, priv2) and its own public key (pub1), a multi-signature cryptocurrency address common to the separate elements (210, 220, 230, 240) being generated and inscribed onto the base (250).

21. The physical medium according to one of claims 15 to 20, said medium (100, 200) comprising
a plurality of n asymmetric cryptographic keys, wherein n>2, said cryptographic keys each comprising a combination of a user public key with a user private key and/or with a public key address and/or with a multi-signature address of multiple public keys,
- the n private user keys being inscribed onto the medium,
- a plurality of n tamper-evident concealing elements for concealing each of the respective private user keys inscribed onto the medium and sealing same, said n private user keys being accessible only by visibly breaking said n respective tamper-evident concealing elements, and
- an n+1th user public key and/or an n+1th cryptographic address (adr, adr-mult) inscribed onto the medium, which is generated from the n user public keys.

22. The physical medium according to one of claims 15 to 21, said medium (100, 200) further comprising one or more of the following pieces of information:
- the name of a management entity (31, 22, 33),
- a serial number,
- a production year,
- a name and an amount of cryptocurrency.
